# EUROPEAN PATENT APPLICATION

(11) **EP 4 542 958 A1**
(43) Date of publication of application: **23.04.2025**
(21) Application number: 23842101.0
(22) Date of filing: 30.06.2023
(51) Int. Cl.: H04L 47/24, H04W 28/02

(54) **DATA SENDING METHOD AND APPARATUS**

(30) Priority: 22.07.2022 CN 202210866262
(71) Applicant: Huawei Technologies Co., Ltd., Shenzhen, Guangdong 518129 (CN)
(72) Inventor: QIANG, Li, Shenzhen, Guangdong 518129 (CN); LIU, Nannan, Shenzhen, Guangdong 518129 (CN); CHANG, Junren, Shenzhen, Guangdong 518129 (CN)
(74) Representative: Körber, Martin Hans
(86) International application number: PCT/CN2023/105257
(87) International publication number: WO 2024/017036

(57) **Abstract**

This application provides a data sending method and an apparatus. The method is applied to a transmitting end, and the method includes: mapping, based on an attribute of a protocol data unit (PDU) set, a protocol data unit (PDU) in the PDU set to one or more transmission paths, where each of the plurality of transmission paths has a different characteristic; and sending the PDU in the PDU set on the one or more transmission paths, where a quantity of transmission paths is less than or equal to a quantity of attribute values of a same type of attribute of the PDU set. It can be learned that the transmitting end may map the PDU in the PDU set to the plurality of transmission paths whose quantity is less than the quantity of attribute values of the same type of attribute of the PDU set, to help improve fineness of controlling quality of service of the PDU set and reduce network overheads.

## Description

This application claims priority to Chinese Patent Application No. 202210866262.0, filed with the China National Intellectual Property Administration on July 22, 2022 and entitled "DATA SENDING METHOD AND APPARATUS", which is incorporated herein by reference in its entirety.

### TECHNICAL FIELD

This application relates to the field of communication technologies, and in particular, to a data sending method and an apparatus.

### BACKGROUND

Extended reality (extended reality, XR) includes augmented reality (augmented reality, AR), virtual reality (virtual reality, VR), mixed reality (mixed reality, MR), and other virtual reality technologies. In many data packets transmitted in an XR service, importance of different data packets may be different.

When to-be-transmitted data packets are classified into important data packets and unimportant data packets, or data packets can be discarded and data packets cannot be discarded, or the like based on importance, a transmitting end may send, by using a transmission path that can provide relatively good quality of service QoS, data packets that are important or cannot be discarded for the transmitting end, and send, by using a transmission path that provides relatively poor QoS, data packets that are unimportant or can be discarded for the transmitting end, to reduce network overheads.

However, when the to-be-transmitted data packets are classified into data packets of more levels of importance, how the transmitting end sends these data packets needs to be considered.

### SUMMARY

Embodiments of this application provide a data sending method and an apparatus, to improve fineness of controlling quality of service of a protocol data unit (PDU) set and reduce network overheads.

According to a first aspect, an embodiment of this application provides a data sending method, which may be applied to a transmitting end (for example, a device or a chip of the transmitting end). The method includes: mapping, based on an attribute of a protocol data unit (PDU) set, a protocol data unit PDU in the PDU set to one or more transmission paths, where each of the plurality of transmission paths has a different characteristic; and sending the PDU in the PDU set on the one or more transmission paths, where a quantity of transmission paths is less than or equal to a quantity of attribute values of a same type of attribute of the PDU set.

It can be learned that, in this embodiment of this application, the transmitting end may map the PDU in the PDU set to the plurality of transmission paths whose quantity is less than the quantity of attribute values of the same type of attribute of the PDU set, to help improve fineness of controlling quality of service of the PDU set, simplify a network architecture, and reduce network overheads.

In an optional implementation, the attribute of the PDU set includes: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

It can be learned that the attribute of the PDU set may represent a priority, importance, and the like of the PDU in the PDU set.

In an optional implementation, the characteristic of the transmission path includes: a PDU packet loss rate, a bandwidth, a transmission delay, a logical channel priority, and a priority.

When the characteristic of the transmission path is the PDU packet loss rate, a smaller PDU packet loss rate indicates a better characteristic of the transmission path. When the characteristic of the transmission path is the bandwidth, a higher bandwidth indicates a better characteristic of the transmission path. When the characteristic of the transmission path is the transmission delay, a shorter transmission delay indicates a better characteristic of the transmission path. When the characteristic of the transmission path is the logical channel priority, a higher logical channel priority indicates a better characteristic of the transmission path. When the characteristic of the transmission path is the priority, a higher priority indicates a better characteristic of the transmission path.

In an optional implementation, the same type of attribute of the PDU set has at least three different values. In this manner, the fineness of controlling the quality of service of the PDU set can be improved.

In an optional implementation, if an attribute value of the PDU set is better than a first preset value, each PDU in the PDU set is mapped to a first transmission path; and/or if the attribute value of the PDU set is not better than a second preset value, each PDU in the PDU set is mapped to a second transmission path; and/or if the attribute value of the PDU set is better than the second preset value and not better than the first preset value, (100-X)% PDUs in the PDU set are mapped to the first transmission path, and X% PDUs are mapped to the second transmission path.

A characteristic of the first transmission path is better than a third preset value, and a characteristic of the second transmission path is not better than a fourth preset value. The first preset value is better than the second preset value, and the third preset value is better than the fourth preset value. X is related to the attribute value of the PDU set, and X is greater than 0 and less than 100.

The attribute value of the PDU set is a value representing the attribute of the PDU set. For example, when the attribute of the PDU set is the priority, the attribute value of the PDU set is a level value corresponding to the priority of the PDU set. When the attributes of the PDU set are different, that the attribute value of the PDU set is better than the first preset value, or the attribute value of the PDU set is not better than the second preset value has different meanings.

For example, when the attribute of the PDU set is the priority, that the attribute value of the PDU set is better than the first preset value means that a priority level of the PDU set is greater than the first preset value, and that the attribute value of the PDU set is not better than the second preset value means that the priority level of the PDU set is less than or equal to the second preset value. For another example, when the attribute of the PDU set is the tolerable loss proportion for the PDU in the PDU set, that the attribute value of the PDU set is better than the first preset value means that the tolerable loss proportion for the PDU in the PDU set is less than the first preset value, and that the attribute value of the PDU set is not better than the second preset value means that the tolerable loss proportion for the PDU in the PDU set is greater than or equal to the second preset value.

When the characteristics of the transmission path are different, that the characteristic of the first transmission path is better than the third preset value and the characteristic of the second transmission path is not better than the fourth preset value each are understood differently. That the characteristic of the first transmission path is better than the third preset value may indicate the following cases: A packet loss rate of the PDU on the first transmission path is less than the third preset value; a bandwidth of the first transmission path is higher than the third preset value; a transmission delay of the first transmission path is less than the third preset value; a logical channel priority of the first transmission path is higher than the third preset value; and a priority of the first transmission path is higher than the third preset value. Similarly, that the characteristic of the second transmission path is not better than the fourth preset value is also understood similarly.

It can be learned that, for a PDU set with a good attribute, the transmitting end maps the PDU set to the first transmission path with a good characteristic, to increase a percentage of PDUs that are successfully sent in the PDU set. For a PDU set with a poor attribute, the transmitting end maps the PDU set to the second transmission path with a general characteristic, to reduce the network overheads. For a PDU set whose attribute is in the middle, the transmitting end maps a part of PDUs in each PDU set to the first transmission path, and maps the remaining PDUs in each PDU set to the second transmission path, to reduce the network overheads while ensuring a percentage of PDUs that are successfully sent in a PDU set with a general attribute.

In another optional implementation, if an attribute value of the PDU set is better than a first preset value, each PDU in the PDU set is mapped to a first transmission path; and/or if the attribute value of the PDU set is not better than a second preset value, each PDU in the PDU set is mapped to a second transmission path; and/or if the attribute value of the PDU set is better than the second preset value and not better than the first preset value, (100-X-x)% PDUs in the PDU set are mapped to the first transmission path, and (X+x)% PDUs are mapped to the second transmission path. A characteristic of the first transmission path is better than a third preset value, and a characteristic of the second transmission path is not better than a fourth preset value. The first preset value is better than the second preset value, and the third preset value is better than the fourth preset value. X is related to the attribute value of the PDU set, and X is greater than 0 and less than 100. x is a real number greater than or equal to 0 and less than or equal to 100-X.

A difference between this manner and the foregoing implementation lies in that the transmitting end determines that the second transmission path with a poor transmission characteristic can also be responsible for successful sending of a part of PDUs. Therefore, for a PDU set whose attribute is in the middle, the transmitting end not only enables the first transmission path to carry a part of PDUs that need to be successfully sent in the PDU set, but also enables the second transmission path to carry a part of PDUs that need to be successfully sent in the PDU set. In other words, the transmitting end enables both the first transmission path and the second transmission path to carry the part of PDUs that need to be successfully sent in the PDU set, to ensure a percentage of PDUs that are successfully sent in the PDU set.

In the foregoing two manners, the transmitting end maps, based on an attribute of each PDU set, a PDU in the PDU set to transmission paths with different characteristics, and a quantity of transmission paths to which the PDU is mapped is less than or equal to a quantity of attribute values of a same type of attribute of the PDU set. In this way, the fineness of controlling the quality of service can be improved, and the network overheads can be reduced.

In an optional implementation, the first transmission path is associated with a first packet data convergence protocol PDCP entity, and the second transmission path is associated with a second PDCP entity. That the first transmission path is associated with the first packet data convergence protocol PDCP entity may be understood as: The first transmission path is a transmission path on which the transmitting end uses the first PDCP entity for data transmission. Similarly, the second transmission path is a transmission path on which the transmitting end uses the second PDCP entity for data transmission.

It can be learned that the transmitting end includes two PDCP entities, and different PDCP entities are associated with different transmission paths.

In an optional implementation, the first PDCP entity is associated with a first radio link control RLC entity and a second RLC entity of the second PDCP entity. Because the characteristic of the first transmission path is better than the characteristic of the second transmission path, the first RLC entity uses an acknowledged mode for transmission, to ensure the characteristic of the first transmission path, and the second RLC entity uses an unacknowledged mode for transmission, to reduce the network overheads.

Optionally, the first PDCP entity is associated with a plurality of first RLC entities, and the second PDCP entity is associated with a second RLC entity. The plurality of first RLC entities use an unacknowledged mode for transmission, to ensure the characteristic of the first transmission path. The second RLC entity also uses the unacknowledged mode for transmission, to reduce the network overheads.

In another optional implementation, both the first transmission path and the second transmission path are associated with a third PDCP entity. In other words, the transmitting end includes one third PDCP entity, and the first transmission path and the second transmission path jointly use the third PDCP entity for data transmission.

In an optional implementation, the third PDCP entity is associated with a first RLC entity and a second RLC entity. The first RLC entity is an RLC entity associated with the first transmission path, and the second RLC entity is an RLC entity associated with the second transmission path.

Because the characteristic of the first transmission path is better than the characteristic of the second transmission path, the first RLC entity uses an acknowledged mode for transmission, to ensure the characteristic of the first transmission path, and the second RLC entity uses an unacknowledged mode for transmission, to reduce the network overheads.

In another optional implementation, the third PDCP entity is associated with a plurality of first RLC entities and a second RLC entity. The plurality of first RLC entities are RLC entities associated with the first transmission path, and the second RLC entity is an RLC entity associated with the second transmission path.

The plurality of first RLC entities associated with the first transmission path may use an unacknowledged mode for transmission, to ensure the characteristic of the first transmission path, and the second RLC entity associated with the second transmission path may also use the unacknowledged mode for transmission, to reduce the network overheads.

In an optional implementation, the transmitting end may further associate a parent PDU set sequence number of a first PDU set with a sub-PDU set sequence number of a second PDU set. The first PDU set is any PDU set in the PDU set, and the second PDU set is a PDU set including a part of or all PDUs in the first PDU set. When the second PDU set is a PDU set including all the PDUs in the first PDU set, the second PDU set is the first PDU set.

When the transmitting end includes the first PDCP entity and the second PDCP entity, the parent PDU set sequence number is a sequence number maintained at a service data adaptation protocol SDAP layer, and the sub-PDU set sequence number is a sequence number maintained at a PDCP layer. When the transmitting end includes the third PDCP entity, the parent PDU set sequence number is a sequence number maintained at a PDCP layer, and the sub-PDU set sequence number is a sequence number maintained at an RLC layer.

It can be learned that the transmitting end may associate a sequence number that is of any PDU set in the PDU set and that is maintained at the SDAP layer with a sequence number that is of a PDU set including a part of or all PDUs in the PDU set and that is maintained at the PDCP layer. Alternatively, the transmitting end may associate a sequence number that is of any PDU set in the PDU set and that is maintained at the PDCP layer with a sequence number that is of a PDU set including a part of or all PDUs in the PDU set and that is maintained at the RLC layer.

In an optional implementation, when determining that y PDUs in a third PDU set are lost, the transmitting end may further stop sending the third PDU set and a fourth PDU set. y is an integer greater than or equal to 1, the third PDU set is a PDU set including the part of PDUs mapped to the first transmission path, the fourth PDU set is a PDU set including the part of PDUs mapped to the second transmission path, and a parent PDU set sequence number of the fourth PDU set is the same as a parent PDU set sequence number of the third PDU set.

When there is a lost PDU in the PDU set including the part of PDUs mapped to the first transmission path, it cannot be ensured that all PDUs in the PDU set are successfully sent, in other words, a percentage of sent PDUs in the PDU set cannot be ensured. In this way, the transmitting end determines not to continue to send another PDU in the PDU set, and not to continue to send a PDU in a PDU set having a same parent PDU set sequence number as the PDU set. In this manner, a percentage of PDUs that are successfully sent in a PDU set other than the third PDU set and the fourth PDU set can be increased, and the network overheads can be reduced.

In another optional implementation, when determining that y packets in a third PDU set are lost and z packets in a fourth PDU set are successfully sent, the transmitting end may further send the third PDU set and the fourth PDU set. The third PDU set is a PDU set including the part of PDUs mapped to the first transmission path, the fourth PDU set is a PDU set including the part of PDUs mapped to the second transmission path, and a parent PDU set sequence number of the fourth PDU set is the same as a parent PDU set sequence number of the third PDU set. y is an integer greater than or equal to 1, and z is an integer greater than or equal to y.

Different from the foregoing implementation, when determining that there is a lost PDU in the PDU set including the part of PDUs mapped to the first transmission path, the transmitting end does not directly stop sending another PDU in the PDU set and a PDU in a PDU set having a same parent PDU set sequence number as the PDU set, but determines whether PDUs whose quantity is greater than or equal to a quantity of lost PDUs and that are in the PDU set having the same parent PDU set sequence number as the PDU set are successfully sent on the second transmission path. If the transmitting end determines that the PDUs whose quantity is greater than or equal to the quantity of lost PDUs and that are in the PDU set having the same parent PDU set sequence number as the PDU set are successfully sent by using the second transmission path, it indicates that continuing to send the another PDU in the PDU set and the PDU in the PDU set having the same parent PDU set sequence number as the PDU set can still ensure a percentage of PDUs that are successfully sent in the PDU set and a percentage of PDUs that are successfully sent in the PDU set having the same parent PDU set sequence number as the PDU set. Therefore, the transmitting end still continues to send the PDU in the PDU set and the PDU in the PDU set having the same parent PDU set sequence number as the PDU set.

According to a second aspect, this application further provides a communication apparatus. The communication apparatus has a part of or all functions of implementing the transmitting end according to the first aspect. For example, functions of the communication apparatus may have functions in a part of or all embodiments of the transmitting end in the first aspect of this application, or may have a function of separately implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes the processing unit and the communication unit.

The processing unit is configured to map, based on an attribute of a protocol data unit (PDU) set, a protocol data unit PDU in the PDU set to one or more transmission paths, where each of the plurality of transmission paths has a different characteristic.

The communication unit is configured to send the PDU in the PDU set on the one or more transmission paths.

A quantity of transmission paths is less than or equal to a quantity of attribute values of a same type of attribute of the PDU set.

In addition, for another optional implementation of the communication apparatus in this aspect, refer to related content of the first aspect. Details are not described herein again.

In an example, the communication unit may be a transceiver or a communication interface, the storage unit may be a memory, and the processing unit may be a processor.

In an implementation, the communication apparatus includes the processor and the transceiver.

The processor is configured to map, based on an attribute of a protocol data unit (PDU) set, a protocol data unit PDU in the PDU set to one or more transmission paths, where each of the plurality of transmission paths has a different characteristic.

The transceiver is configured to send the PDU in the PDU set on the one or more transmission paths.

A quantity of transmission paths is less than or equal to a quantity of attribute values of a same type of attribute of the PDU set.

In addition, for another optional implementation of the uplink communication apparatus in this aspect, refer to related content of the first aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least a part of or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system-on-a-chip (system-on-a-chip, SoC). Whether the components are independently disposed on different chips or integrated and disposed on one or more chips usually depends on a need of a product design. This embodiment of this application imposes no limitation on specific implementations of the foregoing components.

According to a third aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, during receiving of the input information by the processor, the transceiver receives the information, and inputs the information to the processor. Further, after the transceiver receives the information, other processing may need to be performed on the information before the information is input into the processor.

Based on the foregoing principle, for example, the sending the PDU in the PDU set on the one or more transmission paths mentioned in the foregoing method may be understood as that the processor outputs the PDU in the PDU set on the one or more transmission paths.

Unless otherwise specified, operations such as sending and receiving related to the processor may be more generally understood as operations such as output, receiving, and input of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a fourth aspect, this application further provides a communication system. The system includes one or more network devices and one or more terminal devices. In another possible design, the system may further include another device that interacts with the network device and the terminal device.

According to a fifth aspect, this application provides a computer-readable storage medium, configured to store instructions, and when the instructions are run by a computer, the method according to any one of the first aspect is implemented.

According to a sixth aspect, this application further provides a computer program product including instructions. When the computer program product runs on a computer, the method according to any one of the first aspect is implemented.

According to a seventh aspect, this application provides a chip system. The chip system includes a processor and an interface. The interface is configured to obtain a program or instructions, and the processor is configured to invoke the program or the instructions to implement or support a transmitting end in implementing a function in the first aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete component.

According to an eighth aspect, this application provides a communication apparatus including a processor, configured to execute a computer program or executable instructions stored in a memory. When the computer program or the executable instructions are executed, the apparatus is enabled to perform the method in the possible implementations of the first aspect.

In a possible implementation, the processor and the memory are integrated together.

In another possible implementation, the memory is located outside the communication apparatus.

For beneficial effects brought by the second aspect to the eighth aspect, refer to beneficial effects brought by the first aspect. Details are not described herein again.

### BRIEF DESCRIPTION OF DRAWINGS

FIG. 1 is a diagram of a system structure of a communication system according to an embodiment of this application;
FIG. 2 is a schematic flowchart of a data sending method according to an embodiment of this application;
FIG. 3 is a diagram of an entity architecture of a transmitting end according to an embodiment of this application;
FIG. 4 is a diagram of an entity architecture of another transmitting end according to an embodiment of this application;
FIG. 5 is a diagram of an entity architecture of still another transmitting end according to an embodiment of this application;
FIG. 6 is a diagram of an entity architecture of still another transmitting end according to an embodiment of this application;
FIG. 7 is a mapping diagram of a type of protocol data unit set mapping according to an embodiment of this application;
FIG. 8 is a mapping diagram of another type of protocol data unit set mapping according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of a chip according to an embodiment of this application.

### DESCRIPTION OF EMBODIMENTS

The following clearly and completely describes the technical solutions in embodiments of this application with reference to the accompanying drawings in embodiments of this application.

The terms "first", "second", and the like in the specification, the claims, and the accompanying drawings of this application are used to distinguish between different objects, but are not used to describe a specific sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more. "A plurality of" means two or more. "At least two (items)" means two, three, or more. "And/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural. Both "when" and "if" mean that corresponding processing is performed in an objective situation, are not intended to limit time, do not require a determining action during implementation, and do not mean any other limitation.

In embodiments of this application, a word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

To better understand a data sending method disclosed in embodiments of this application, a communication system to which embodiments of this application are applicable is described.

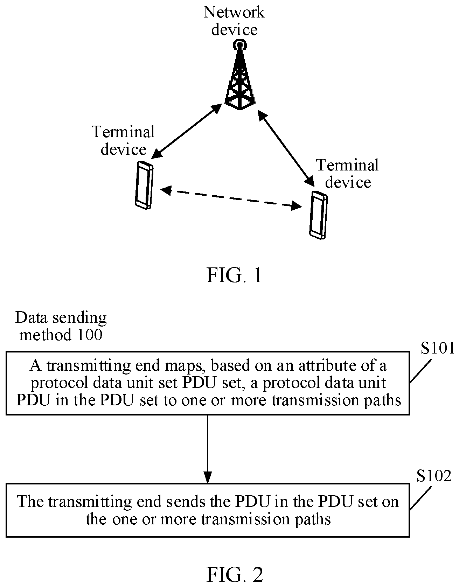

Embodiments of this application may be applied to wireless communication systems such as a 5th generation mobile communication (5th generation mobile communication, 5G) system, a 6th generation mobile communication (6th generation mobile communication, 6G) system, a satellite communication system, and a short-range communication system. A system architecture is shown in FIG. 1. The wireless communication system may include one or more network devices and one or more terminal devices. Point-to-point communication may be performed in the wireless communication system. For example, a plurality of terminal devices communicate with each other.

It may be understood that the wireless communication system mentioned in embodiments of this application includes but is not limited to a narrowband internet of things (narrowband internet of things, NB-IoT) system, a long term evolution (long term evolution, LTE) system, a 5G/6G mobile communication system in three major application scenarios: enhanced mobile broadband (enhanced mobile broadband, eMBB), ultra reliable low latency communication (ultra reliable low latency communication, URLLC), and massive machine type communication (massive machine type communication, mMTC), a wireless fidelity (wireless fidelity, Wi-Fi) system, a mobile communication system after 5G, or the like.

In embodiments of this application, the network device is a device having a wireless transceiver function, is configured to communicate with the terminal device, and may be an evolved NodeB (evolved NodeB, eNB or eNodeB) in LTE, a base station in a 5G/6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in the future, an access node in a Wi-Fi system, a transmitting and receiving point (transmitting and receiving point, TRP), a transmitting point (transmitting point, TP), a mobile switching center, and a device that provides a base station function in device-to-device (device-to-device, D2D), vehicle-to-everything (vehicle-to-everything, V2X), or machine-to-machine (machine-to-machine, M2M) communication. This is not specifically limited in embodiments of this application.

The network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, bears a data service, and the like.

The terminal device in embodiments of this application may include various handheld devices, vehicle-mounted devices, wearable devices, or computing devices having a wireless communication function, or other processing devices connected to a wireless modem. The terminal device may also be referred to as the terminal. The terminal device may also be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, a transmitting end may be the foregoing network device, or may be the foregoing terminal device.

"Mapping" in embodiments of this application may be understood as: placing all or a part of protocol data units (protocol data units, PDUs) in a protocol data unit set (protocol data unit set, PDU set) in a buffer/queue/window of a protocol entity, and when there is a transmission resource, sending the PDU in the buffer/queue/window to a receiving end by using the protocol entity or a protocol resource associated with the protocol entity. The protocol entity may be a service data adaptation protocol (service data adaptation protocol, SDAP) entity, a packet data convergence protocol (packet data convergence protocol, PDCP) entity, a radio link control (radio link control, RLC) entity, or a medium access control (medium access control, MAC) entity. The protocol resource may be a logical channel, a logical channel group, a hybrid automatic repeat request (hybrid automatic repeat request, HARQ) entity, or a HARQ process.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

An embodiment of this application provides a data sending method 100. FIG. 2 is a schematic flowchart of the data sending method 100. The data sending method 100 is described from a perspective of a transmitting end. The data sending method 100 includes but is not limited to the following steps.

S101: The transmitting end maps, based on an attribute of a protocol data unit (PDU) set, a protocol data unit PDU in the PDU set to one or more transmission paths.

S102: The transmitting end sends the PDU in the PDU set on the one or more transmission paths.

Each of the plurality of transmission paths has a different characteristic, and a quantity of transmission paths is less than or equal to a quantity of attribute values of a same type of attribute of the protocol data unit (PDU) set.

The PDU set includes one or more protocol data units PDUs. In an XR service, data included in one PDU set may correspond to data of one frame, and the data of one frame may be data of one frame of picture.

In this embodiment of this application, the PDU may also be understood as a data packet. In this way, that one PDU set includes one or more PDUs may also be understood as that one PDU includes one or more data packets.

It may be understood that packets in the PDU set belong to a same service flow, belong to a same internet protocol (Internet Protocol, IP) flow, or belong to a same quality of service (quality of service, QoS) flow.

In an optional implementation, the attribute of the PDU set includes but is not limited to: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

The priority and the importance respectively represent a priority of the PDU in the PDU set and importance of the PDU in the PDU set. The tolerable loss proportion for the PDU in the PDU set is a maximum tolerable loss proportion for the PDU in the PDU set. For example, a PDU set #1 includes 100 PDUs, and a tolerable proportion for the PDUs in the PDU set #1 is 20%. It indicates that loss of a maximum of 20 PDUs in the PDU set #1 is tolerated. In other words, at least 80 PDUs in the PDU set #1 are required to be successfully sent.

The correct receiving rate of the PDU in the PDU set is a minimum probability of correctly receiving the PDU in the PDU set. For example, a PDU set #3 includes 100 PDUs, and a correct receiving rate of the PDUs in the PDU set #3 is 60%. It indicates that at least 60 PDUs in the PDU set #3 should be correctly received. The fault tolerance rate that the PDU in the PDU set needs to satisfy is a maximum probability of failing to send the PDU in the PDU set. For example, a PDU set #4 includes 100 PDUs, and a fault tolerance rate that the PDUs in the PDU set #4 need to satisfy is 10%. It indicates that sending failures of a maximum of 10 PDUs in the PDU set #4 are tolerated.

The type of the information carried in the PDU set is a type of information carried in the PDU in the PDU set. The type of the information carried in the PDU set includes but is not limited to the following: video-type data, voice-type data, control instruction-type data, I-frame data in a video, P-frame data in a video, and sensor data.

For example, a PDU in a PDU set #1 carries video data, and a PDU in a PDU set #2 carries voice data. For another example, a PDU in a PDU set #3 carries I-frame data in a video, and a PDU in a PDU set #2 carries P-frame data in a video.

The quantity of bytes allowed to be lost or incorrect in the total quantity of bytes of the PDU set represents a maximum quantity of bytes that can be lost or incorrect in the total quantity of bytes of the PDU set. For example, a PDU set #2 includes 100 bytes, and a quantity of bytes allowed to be incorrect in a total quantity of bytes of the PDU set #2 is 30. It indicates that a maximum of 30 bytes in the PDU set #2 can be lost or incorrect. In other words, at least 70 bytes in the PDU set #2 are required to be successfully sent.

The bit error rate of the data in the PDU set may be a maximum bit error rate allowed when the data in the PDU set is sent. For example, a PDU set #3 includes 100 PDUs, and a bit error rate of data in the PDU set #3 is 10%. In this way, a maximum bit error rate allowed for the 100 PDUs in the PDU set #3 is 10%. In other words, a maximum of 10 PDUs in the 100 PDUs are allowed to be transmitted incorrectly.

Whether the PDU set can be discarded may mean whether all the data in the PDU set can be discarded. For example, the PDU set is a PDU set #1, and the PDU set #1 includes 80 PDUs. If the PDU set #1 can be discarded, it indicates that all the 80 PDUs in the PDU set #1 can be discarded, and it may indicate that data carried in the PDU set #1 is not important. For another example, the PDU set includes a PDU set #1, a PDU set #2, and a PDU set #3. If the PDU set can be discarded, it indicates that data in the PDU set #1, the PDU set #2, and the PDU set #3 all can be discarded.

It can be learned that, regardless of a type or types of attributes of the PDU set, importance of the PDU in the PDU set is different when the attributes of the PDU set are different.

It may be understood that an attribute value of the PDU set is a value representing the attribute of the PDU set. For example, when the attribute of the PDU set is the priority, the attribute value of the PDU set is a level value corresponding to the priority of the PDU set. For another example, when the attribute of the PDU set is the importance, the attribute value of the PDU set is a level corresponding to the importance of the PDU set. For another example, when the attribute of the PDU set is the tolerable loss proportion for the PDU in the PDU set, the attribute value of the PDU set is a value of the tolerable loss proportion for the PDU in the PDU set. For another example, when the attribute of the PDU set is the correct receiving rate of the PDU in the PDU set, the attribute value of the PDU set is the correct receiving rate of the PDU in the PDU set. For another example, when the attribute of the PDU set is the fault tolerance rate that the PDU in the PDU set needs to satisfy, the attribute value of the PDU set is the fault tolerance rate that the PDU in the PDU set needs to satisfy. For another example, when the attribute of the PDU set is the type of the information carried in the PDU set, the attribute value of the PDU set is a level value of a priority or an importance level corresponding to the type of the information carried by the PDU set.

The attribute value of the same type of attribute of the PDU set indicates one or more attribute values corresponding to one attribute of the PDU set. For example, when the attribute of the PDU set is the priority, the priority of the PDU set may be classified into a level A, a level B, and a level C. In this way, the level A, the level B, and the level C are a plurality of attribute values corresponding to the attribute of the PDU set when the attribute of the PDU set is the priority. For another example, when the attribute of the PDU set is the tolerable loss proportion for the PDU in the PDU set, the tolerable loss proportion for the PDU in the PDU set may include 0%, 40%, 70%, and 100%. In this way, 0%, 40%, 70%, and 100% are a plurality of attribute values corresponding to the attribute of the PDU set when the attribute of the PDU set is the tolerable loss proportion for the PDU in the PDU set.

In an optional implementation, the characteristic of the transmission path includes but is not limited to: a PDU packet loss rate, a bandwidth, a delay, a logical channel priority, and a priority.

The PDU packet loss rate is a packet loss rate of a PDU transmitted on the transmission path. A smaller PDU packet loss rate indicates a better characteristic of the transmission path. The bandwidth is a bandwidth used for PDU transmission on the transmission path. A higher bandwidth indicates a better characteristic of the transmission path. The delay is a PDU transmission delay on the transmission path. A shorter delay indicates a better characteristic of the transmission path. The logical channel priority is a logical channel priority of the transmission path. The logical channel priority may be a priority corresponding to the transmission path when transmission starts from an RLC layer to a lower protocol layer. A higher logical channel priority indicates a better characteristic of the transmission path. The priority is a priority of the transmission path. The priority may be a priority corresponding to the transmission path when transmission starts from a PDCP layer to a lower protocol layer. A higher priority indicates a better characteristic of the transmission path.

In an optional implementation, the same type of attribute of the PDU set has at least three different attribute values. For example, when the attribute of the PDU set is the priority, the priority of the PDU set may be classified into a level A, a level B, and a level C, where the level A is greater than the level B, and the level B is greater than the level C. For another example, when the attribute of the PDU set is the importance, importance levels of the PDU set may be classified into three levels: important, unimportant, and moderately important. For another example, when the attribute of the PDU set is the type of the information carried in the PDU set, the type of the information carried in the PDU set may be classified into video data, voice data, and sensor data.

It can be learned that, in this manner, the transmitting end may further classify the same type of attribute of the PDU set into at least three different levels/different attribute values, so that fineness of controlling quality of service of the PDU set can be improved.

In this embodiment of this application, that the transmitting end maps the PDU in the PDU set to the one or more transmission paths may be further understood as: The transmitting end sends the PDU in the PDU set by using the one or more transmission paths, or the transmitting end sends the PDU in the PDU set by using resources on the one or more transmission paths.

The following describes, with reference to a quantity and attributes of PDU sets, an implementation in which the transmitting end maps, based on the attribute of the PDU set, the PDU in the PDU set to the one or more transmission paths.

Case 1: There are one or more PDU sets, and an attribute value of each of the one or more PDU sets is better than a first preset value. The transmitting end maps a PDU in each of the one or more PDU sets to a first transmission path.

A characteristic of the first transmission path is better than a third preset value, and the first preset value and the third preset value are preset.

When the attributes of the PDU set are of different types, that the attribute value of the PDU set is better than the first preset value has different meanings. For example, when the attribute of the PDU set is the priority, that the attribute value of the PDU set is better than the first preset value means that the attribute value of the PDU set is greater than the first preset value. For another example, when the attribute of the PDU set is the tolerable loss proportion for the PDU in the PDU set, that the attribute value of the PDU set is better than the first preset value means that the attribute value of the PDU set is less than the first preset value.

It may be understood that attribute values of the one or more PDU sets are the same or different, or attribute values of a part of PDU sets in the one or more PDU sets are the same, and attribute values of a part of PDU sets in the one or more PDU sets are different.

When characteristics of the transmission path are different, that the characteristic of the first transmission path is better than the third preset value is understood differently. That the characteristic of the first transmission path is better than the third preset value may indicate the following cases: A packet loss rate of the PDU on the first transmission path is less than the third preset value; a bandwidth of the first transmission path is higher than the third preset value; a transmission delay of the first transmission path is less than the third preset value; a logical channel priority of the first transmission path is higher than the third preset value; and a priority of the first transmission path is higher than the third preset value.

In this embodiment of this application, the first preset value may be preset based on an attribute type of the PDU set. For example, when the attribute of the PDU set is the tolerable loss proportion for the PDU in the PDU set, the transmitting end presets the first preset value to 10%. For another example, when the attribute of the PDU set is the correct receiving rate of the PDU in the PDU set, the transmitting end presets the first preset value to 95%.

The third preset value may be preset based on a type representing the characteristic of the transmission path. For example, when the characteristic of the transmission path is the PDU packet loss rate, the transmitting end presets the third preset value to 5%. For another example, when the characteristic of the transmission path is the transmission delay, the transmitting end presets the third preset value to 0.2, where a unit is ms.

When there are one or more PDU sets, and an attribute value of each of the one or more PDU sets is better than the first preset value, it indicates that each of the one or more PDU sets has high importance or has a high priority, or a tolerable loss proportion for PDUs in each PDU set is small, or the like, so that a percentage of PDUs in each PDU set that are required to be successfully sent is high.

For example, the attribute of the PDU set is the tolerable loss proportion for the PDU in the PDU set, and the first preset value is 5%. It indicates that the tolerable loss proportion for each of the one or more PDU sets is less than 5%. In other words, more than 95% PDUs in each of the one or more PDU sets are required to be successfully sent.

That the characteristic of the first transmission path is better than the third preset value indicates that the first transmission path is a transmission path with a high characteristic, or may represent that the first transmission path can provide data transmission with high quality of service (quality of service, QoS). For example, when the PDU is sent by using the first transmission path, it can be ensured that the PDU has a low packet loss rate, in other words, it can be ensured that almost no sent PDU is lost, or it can be ensured that a delay of the PDU is short, or the like.

Therefore, when the attribute value of the one or more PDU sets is better than the first preset value, the transmitting end maps the PDU in each of the one or more PDU sets to the first transmission path, to ensure a percentage of PDUs that are successfully sent in each of the one or more PDU sets, or to increase a percentage of PDUs that are successfully sent in each of the one or more PDU sets.

For example, the PDU set is a PDU set #1, a tolerable loss proportion for PDUs in the PDU set #1 is 0.5%, and the first preset value is 1%. In this way, the transmitting end maps all the PDUs in the PDU set #1 to the first transmission path, in other words, the transmitting end sends all the PDUs in the PDU set #1 by using the first transmission path.

For example, the PDU sets include a PDU set #1, a PDU set #2, and a PDU set #3, a correct receiving rate of PDUs in each of the PDU set #1, the PDU set #2, and the PDU set #3 is 100%, and the first preset value is 90%. In this way, the transmitting end maps all the PDUs in the PDU set #1, the PDU set #2, and the PDU set #3 to the first transmission path, in other words, the transmitting end sends the PDU set #1, the PDU set #2, and the PDU set #3 by using the first transmission path.

For example, the PDU sets include a PDU set #1, a PDU set #2, and a PDU set #3, tolerable loss proportions for PDUs in the PDU set #1, the PDU set #2, and the PDU set #3 are respectively 100%, 98%, and 90%, and the first preset value is 85%. In this way, the transmitting end maps all the PDUs in the PDU set #1, the PDU set #2, and the PDU set #3 to the first transmission path.

Case 2: There are one or more PDU sets, and an attribute value of each of the one or more PDU sets is not better than a second preset value. The transmitting end maps a PDU in each of the one or more PDU sets to a second transmission path, where a characteristic of the second transmission path is not better than a fourth preset value.

Both the second preset value and a third preset value are preset, a first preset value is better than the second preset value, and the third preset value is better than the fourth preset value.

It may be understood that the second preset value may be preset based on an attribute type of the PDU set. For example, when the attribute of the PDU set is the tolerable loss proportion for the PDU in the PDU set, the transmitting end presets the second preset value to 90%.

The fourth preset value may be preset based on a type representing the characteristic of the transmission path. For example, when the characteristic of the transmission path is the PDU packet loss rate, the transmitting end presets the fourth preset value to 80%.

It may be understood that attribute values of the one or more PDU sets are the same or different, or attribute values of a part of PDU sets in the one or more PDU sets are the same, and attribute values of a part of PDU sets in the one or more PDU sets are different.

When the attributes of the PDU set are different, that the attribute value of the PDU set is not better than the second preset value also has different meanings. For example, when the attribute of the PDU set is the priority, that the attribute value of the PDU set is not better than the second preset value means that the attribute value of the PDU set is less than or equal to the second preset value.

When characteristics of the transmission path are different, that the characteristic of the second transmission path is not better than the fourth preset value is understood differently. An understanding of that the characteristic of the second transmission path is not better than the fourth preset value is opposite to the foregoing understanding of that the characteristic of the first transmission path is better than the third preset value. Details are not described again. For example, when the characteristic of the transmission path is the PDU packet loss rate, that the characteristic of the second transmission path is not better than the fourth preset value means that a packet loss rate of the PDU on the second transmission path is greater than or equal to the fourth preset value.

That the third preset value is better than the fourth preset value indicates that the characteristic of the first transmission path is better than the characteristic of the second transmission path. That the characteristic of the first transmission path is better than the characteristic of the second transmission path may mean the following cases: A packet loss rate of the PDU on the first transmission path is less than the packet loss rate of the PDU on the second transmission path; a bandwidth of the first transmission path is greater than a bandwidth of the second transmission path; a delay of the first transmission path is less than a delay of the second transmission path; a logical channel priority of the first transmission path is higher than a logical channel priority of the second transmission path; and a priority of the first transmission path is higher than a priority of the second transmission path.

In an optional implementation, the characteristic of the first transmission path is better than the characteristic of the second transmission path, and the second transmission path provides a best effort (best effort) service.

That the second transmission path provides the best effort service means that the transmitting end transmits, with best effort based on a network condition, a PDU transmitted on the second transmission path. When the network condition is good, a large quantity of PDUs in to-be-sent PDUs on the second transmission path can be successfully sent, or all the PDUs can be successfully sent. When the network condition is poor, a small quantity of PDUs in to-be-sent PDUs on the second transmission path can be successfully sent, or none of the PDUs can be successfully sent.

For example, when the network condition is good, all the PDUs on the second transmission path can be successfully sent by the transmitting end, in other words, the packet loss rate of the PDU on the second transmission path is 0%. When the network condition is poor, none of the PDUs on the second transmission path is successfully sent by the transmitting end, and in this case, the packet loss rate of the PDU on the second transmission path is 100%.

When the attribute values of the one or more PDU sets are not better than the second preset value, it indicates that a percentage of PDUs that are required to be successfully sent in each of the one or more PDU sets is low, or is not constrained. For example, the one or more PDU sets are allowed to be processed in a best effort manner. That the characteristic of the second transmission path is not better than the fourth preset value indicates that quality of service provided on the second transmission path cannot be ensured, in other words, the quality of service provided on the second transmission path is determined based on the network condition.

Therefore, when the attribute values of the one or more PDU sets are not better than the second preset value, the transmitting end maps the PDU in each of the one or more PDU sets to the second transmission path. In this way, the PDU in each PDU set is sent with best effort when the network condition is good, and a percentage of PDUs that are successfully sent in each PDU set is not ensured when the network condition is poor, to reduce network overheads.

For example, the PDU set is a PDU set #1, a tolerable loss proportion for PDUs in the PDU set #1 is 90%, and the first preset value is 80%. In this way, the transmitting end maps all the PDUs in the PDU set #1 to the second transmission path, in other words, the transmitting end sends all the PDUs in the PDU set #1 by using the second transmission path.

For example, the PDU sets include a PDU set #1, a PDU set #2, and a PDU set #3, correct receiving rates of PDUs in the PDU set #1, the PDU set #2, and the PDU set #3 are respectively 8%, 10%, 15%, and the first preset value is 20%. In this way, the transmitting end maps the PDUs in the PDU set #1, the PDU set #2, and the PDU set #3 to the second transmission path, in other words, the transmitting end sends all the PDUs in the PDU set #1, the PDU set #2, and the PDU set #3 by using the second transmission path.

Case 3: There are one or more PDU sets, and attribute values of the one or more PDU sets are better than a second preset value and not better than a first preset value. The transmitting end maps a part of PDUs in each of the one or more PDU sets to a first transmission path, and maps the remaining PDUs to a second transmission path.

Implementations in which the transmitting end maps the part of PDUs in each of the one or more PDU sets to the first transmission path and maps the remaining PDUs to the second transmission path include but are not limited to the following implementations.

Implementation 1: The transmitting end maps (100-X)% PDUs in each of the one or more PDU sets to the first transmission path, and maps X% PDUs in each PDU set to the second transmission path.

A characteristic of the first transmission path is better than a third preset value, and a characteristic of the second transmission path is not better than the fourth preset value. That is, the characteristic of the first transmission path is better than the characteristic of the second transmission path. The characteristic of the first transmission path is better than the characteristic of the second transmission path. For details, refer to the foregoing descriptions. Details are not described again.

It may be understood that the attribute values of the one or more PDU sets are the same or different, or attribute values of a part of PDU sets in the one or more PDU sets are the same, and attribute values of a part of PDU sets in the one or more PDU sets are different.

In addition, X is related to the attribute value of the PDU set, and X is greater than 0 and less than 100.

It may be understood that, that X is related to the attribute value of the PDU set means that a value of X is determined based on the attribute value of the PDU set. For example, when the attribute of the PDU set is the priority, a lower value of the priority indicates a higher priority level. The priority of the PDU set is 1, and the value of X may be equal to 0. In this way, each PDU in the PDU set is mapped to the first transmission path, and no PDU is mapped to the second transmission path.

For another example, the tolerable loss proportion for PDUs in each of the one or more PDU sets is 30%, and the value of X may be 30. In this way, 70% PDUs in each of the one or more PDU sets are mapped to the first transmission path, and the remaining 30% PDUs are mapped to the second transmission path, to ensure that at least 70% PDUs in each of the one or more PDU sets are successfully sent.

For another example, the one or more PDU sets include a PDU set #1, a PDU set #2, and a PDU set #3, and correct receiving rates of PDUs in the PDU set #1, the PDU set #2, and the PDU set #3 are respectively 90%, 80%, and 70%. In this way, X corresponding to the PDU set #1 may be 10, X corresponding to the PDU set #2 may be 20, and X corresponding to the PDU set #3 may be 30. Therefore, the transmitting end maps 90% PDUs in the PDU set #1 to the first transmission path, maps the remaining 10% PDUs in the PDU set #1 to the second transmission path, maps 80% PDUs in the PDU set #2 to the first transmission path, maps the remaining 20% PDUs in the PDU set #2 to the second transmission path, maps 70% PDUs in the PDU set #3 to the first transmission path, and maps the remaining 30% PDUs in the PDU set #3 to the second transmission path.

For another example, the one or more PDU sets are a PDU set #1, and information carried in the PDU set #1 is voice data. Because importance of the voice data is high, it is determined that the value of X is 15. In this way, the transmitting end maps 85% PDUs in the PDU set #1 to the first transmission path, and maps 15% PDUs to the second transmission path, to ensure that more than 85% PDUs in the PDU set #1 are successfully sent.

In this manner, for a PDU set whose attribute value is better than the second preset value and not better than the first preset value, the transmitting end maps a first part of PDUs in the PDU set to the first transmission path with a good characteristic, and maps the remaining second part of PDUs to the second transmission path with a poor characteristic, where values of the first part and the second part are determined based on the attribute value of the PDU set. In this manner, a percentage of PDUs that are successfully sent in the PDU set can be ensured, and network overheads can be reduced.

Currently, for a PDU set whose attribute value is better than the second preset value and not better than the first preset value, the transmitting end directly maps all PDUs in the PDU set to a third transmission path, where a transmission characteristic of the third transmission path is better than the fourth preset value and not better than the third preset value. In other words, the transmitting end maps, to the third transmission path that matches the attribute value of the PDU set, all the PDUs in the PDU set whose attribute value is better than the second preset value and not better than the first preset value.

It can be learned that, in comparison with a current manner, in a mapping manner in this application for the PDU set whose attribute value is better than the second preset value and not better than the first preset value, the PDU in the protocol data unit (PDU) set may be divided more finely, but the third transmission path is not included. Therefore, in this application, fineness of controlling quality of service of the PDU set can be improved, and the network overheads can be reduced.

Implementation 2: The transmitting end maps (100-X-x)% PDUs in each of the one or more PDU sets to the first transmission path, and maps (X+x)% PDUs in each PDU set to the second transmission path.

X is related to the attribute value of the PDU set, and X is greater than 0 and less than 100. For details, refer to the foregoing descriptions. Details are not described again. x is a real number greater than or equal to 0 and less than or equal to 100-X.

It may be understood that X is related to the attribute value of the PDU set. For a manner of determining X, refer to the descriptions in Implementation 1. Details are not described again. x may be a small number obtained through a plurality of experimental verifications.

It may be understood that the attribute values of the one or more PDU sets are the same or different, or attribute values of a part of PDU sets in the one or more PDU sets are the same, and attribute values of a part of PDU sets in the one or more PDU sets are different.

A difference between this implementation and Implementation 1 lies in that the transmitting end determines that the second transmission path with a poor transmission characteristic can also be responsible for successful sending of a part of PDUs. Therefore, for a PDU set whose attribute is in the middle, the transmitting end not only enables the first transmission path to carry a part of PDUs that need to be successfully sent in the PDU set, but also enables the second transmission path to carry a part of PDUs that need to be successfully sent in the PDU set. In other words, the transmitting end enables both the first transmission path and the second transmission path to carry the part of PDUs that need to be successfully sent in the PDU set, to ensure a percentage of PDUs that are successfully sent in the PDU set.

For example, the PDU sets are a PDU set #1, a tolerable loss proportion for PDUs in the PDU set #1 is 30%, and a proportion of PDUs that can be carried on the second transmission path without being lost is 5%. In this way, the transmitting end maps 65% PDUs in the PDU set #1 to the first transmission path, and maps 35% PDUs in the PDU set #1 to the second transmission path. If the PDU set #1 includes 100 PDUs, the transmitting end maps 65 PDUs in the PDU set #1 to the first transmission path, and maps the remaining 35 PDUs in the PDU set #1 to the second transmission path.

For another example, the PDU set includes a PDU set #1 and a PDU set #2, and tolerable loss proportions for PDUs in the PDU set #1 and the PDU set #2 are respectively 20% and 30%. It is assumed that the second transmission path can be for transmitting at least 10% data packets. In this way, the transmitting end maps 70% PDUs in the PDU set #1 to the first transmission path, maps the remaining 30% PDUs in the PDU set #1 to the second transmission path, maps 60% PDUs in the PDU set #2 to the first transmission path, and maps the remaining 40% PDUs in the PDU set #2 to the second transmission path. In this manner, it can be ensured that at least 80% PDUs in the PDU set #1 are successfully sent, and at least 70% PDUs in the PDU set #2 are successfully sent.

Implementation 3: The transmitting end maps (100-X)% data in each PDU in each of the one or more PDU sets to the first transmission path, and maps X% data in each PDU to the second transmission path. For a value of X, refer to the foregoing descriptions. Details are not described again.

Implementation 4: The transmitting end may map (100-X-x)% data in each PDU in each of the one or more PDU sets to the first transmission path, and map (X+x)% data in each PDU to the second transmission path. For values of X and x, refer to the foregoing descriptions. Details are not described again.

For the one or more PDU sets whose attribute values are better than the second preset value and not better than the first preset value, a difference between the Implementation 3 and Implementation 4 and Implementation 1 and Implementation 2 lies in that in Implementation 3 and Implementation 4, the transmitting end maps a part of data in each PDU in each of the one or more PDU sets to the first transmission path, and maps the remaining part of data in each PDU to the second transmission path. In this manner, a percentage of PDUs that are successfully sent in each of the one or more PDU sets may also be ensured.

Case 4: There are one or more PDU sets. In the one or more PDU sets, attribute values of a part of PDU sets are better than a first preset value, and attribute values of a part of PDU sets are better than a second preset value and not better than the first preset value. The transmitting end maps PDUs in the PDU sets better than the first preset value to a first transmission path, maps a part of PDUs in each of the PDU sets whose attribute values are better than the second preset value and not better than the first preset value to the first transmission path, and maps the remaining PDUs in each PDU set to a second transmission path.

For an implementation in which the transmitting end maps the PDUs in the PDU sets better than the first preset value to the first transmission path, refer to the implementation in Case 1. Details are not described again.

For an implementation in which the transmitting end maps the part of PDUs in each of the PDU sets whose attribute values are better than the second preset value and not better than the first preset value to the first transmission path, and maps the remaining PDUs in each PDU set to the second transmission path, refer to the implementation in Case 3. Details are not described again.

It can be learned that, when the PDU sets include the PDU sets with the two attribute values in Case 1 and Case 3, the transmitting end maps, based on the attribute value of each part of PDU set, the part of PDU set to the first transmission path and the second transmission path, to ensure a percentage of PDUs that are successfully sent in each part of PDU set.

For example, the PDU sets include a PDU set #1 and a PDU set #2, a tolerable loss proportion for PDUs in the PDU set #1 is 0.3%, a tolerable loss proportion for PDUs in the PDU set #2 is 10%, the first preset value is 1%, and the second preset value is 20%. In this way, the transmitting end maps all the PDUs in the PDU set #1 to the first transmission path, to ensure that more than 99.7% PDUs in the PDU set #1 are successfully sent, maps 90% PDUs in the PDU set #2 to the first transmission path, and maps 10% PDUs in the PDU set #2 to the second transmission path, to ensure that at least 90% PDUs in the PDU set #2 are successfully sent.

Case 5: There are one or more PDU sets. In the one or more PDU sets, attribute values of a part of PDU sets are not better than a second preset value, and attribute values of a part of PDU sets are better than the second preset value and not better than a first preset value. The transmitting end maps PDUs in the PDU sets not better than the second preset value to a first transmission path, maps a part of PDUs in each of the PDU sets whose attribute values are better than the second preset value and not better than the first preset value to the first transmission path, and maps the remaining PDUs in each PDU set to a second transmission path.

For an implementation in which the transmitting end maps the PDUs in the PDU sets not better than the second preset value to the first transmission path, refer to the implementation in Case 2. Details are not described again.

For an implementation in which the transmitting end maps the part of PDUs in each of the PDU sets whose attribute values are better than the second preset value and not better than the first preset value to the first transmission path, and maps the remaining PDUs in each PDU set to the second transmission path, refer to the implementation in Case 3. Details are not described again.

For example, the PDU sets include a PDU set #1 and a PDU set #2, a tolerable loss proportion for PDUs in the PDU set #1 is 80%, a tolerable loss proportion for PDUs in the PDU set #2 is 40%, the first preset value is 10%, and the second preset value is 70%. In this way, the transmitting end maps all the PDUs in the PDU set #1 to the second transmission path, maps 60% PDUs in the PDU set #2 to the first transmission path, and maps 40% PDUs in the PDU set #2 to the second transmission path.

Case 6: There are one or more PDU sets. In the one or more PDU sets, attribute values of a part of PDU sets are better than a first preset value, attribute values of a part of PDU sets are not better than a second preset value, and attribute values of a part of PDU sets are better than the second preset value and not better than the first preset value. The transmitting end maps PDUs in the PDU sets better than the first preset value to a first transmission path, maps PDUs in the PDU sets not better than the second preset value to the first transmission path, maps a part of PDUs in each of the PDU sets whose attribute values are better than the second preset value and not better than the first preset value to the first transmission path, and maps the remaining PDUs in each PDU set to a second transmission path.

In this case, for a manner of mapping the one or more PDU sets by the transmitting end, refer to the implementations in Case 1 to Case 3. Details are not described again.

For example, the PDU sets include a PDU set #1, a PDU set #2, and a PDU set #3, a tolerable loss proportion for PDUs in the PDU set #1 is 5%, a tolerable loss proportion for PDUs in the PDU set #2 is 40%, a tolerable loss proportion for PDUs in the PDU set #3 is 80%, the first preset value is 10%, and the second preset value is 70%. In this way, the transmitting end maps all the PDUs in the PDU set #1 to the first transmission path, maps 60% PDUs in the PDU set #2 to the first transmission path, maps 40% PDUs in the PDU set #2 to the second transmission path, and maps all the PDUs in the PDU set #3 to the second transmission path.

In this manner, the attribute values of a same type of attribute of the one or more PDU sets are classified into three types, but the PDUs in the one or more PDU sets are still mapped to the first transmission path and the second transmission path, in other words, a quantity of transmission paths to which the PDU set is mapped is less than a quantity of attribute values of the same type of attribute of the PDU sets. This can improve fineness of controlling quality of service of the PDU set and reduce network overheads.

Case 7: There are one or more PDU sets. In the one or more PDU sets, attribute values of a part of PDU sets are better than a first preset value, and attribute values of a part of PDU sets are not better than a second preset value. The transmitting end maps a PDU set whose attribute value is better than the first preset value in the one or more PDU sets to a first transmission path, and maps a PDU set whose attribute value is not better than the second preset value to a second transmission path.

For an implementation in which the transmitting end maps the PDU set whose attribute value is better than the first preset value in the one or more PDU sets to the first transmission path, refer to the implementation in Case 1. Details are not described again. For an implementation in which the transmitting end maps the PDU set whose attribute value is not better than the second preset value to the second transmission path, refer to the implementation in Case 2. Details are not described again.

For example, the PDU sets include a PDU set #1 and a PDU set #2, a tolerable loss proportion for PDUs in the PDU set #1 is 5%, a tolerable loss proportion for PDUs in the PDU set #2 is 90%, the first preset value is 10%, and the second preset value is 70%. In this way, the transmitting end maps all the PDUs in the PDU set #1 to the first transmission path, and maps all the PDUs in the PDU set #2 to the second transmission path.

It can be learned that the transmitting end may classify values of a same type of attribute of the PDU set into at least three values, and when the attribute values of the PDU set are different, the transmitting end maps the PDU set in different manners.

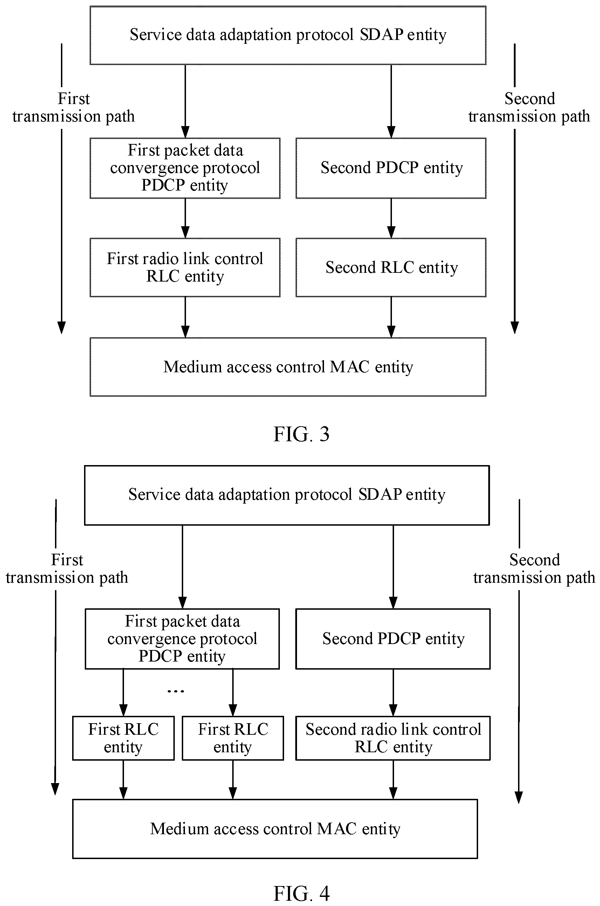

In this embodiment of this application, a diagram of an entity architecture of the transmitting end may be shown in FIG. 3. The transmitting end includes a service data adaptation protocol SDAP entity, a first PDCP entity, a second PDCP entity, a first RLC entity, a second RLC entity, and a MAC entity. The SDAP entity is connected to the first PDCP entity and the second PDCP entity. A first transmission path is associated with the first PDCP entity, and a second transmission path is associated with the second PDCP entity. In other words, the first transmission path is a transmission path used when the first PDCP entity is used for transmission, and the second transmission path is a transmission path used when the second PDCP entity is used for transmission.

As shown in FIG. 3, the first PDCP entity is associated with the first RLC entity, and the second PDCP entity is associated with the second RLC entity. In other words, the first PDCP entity is connected to the first RLC entity, and the second PDCP entity is connected to the second RLC entity.

Optionally, as shown in FIG. 4, a first PDCP entity is associated with a plurality of first RLC entities, and a second PDCP entity is associated with a second RLC entity. In other words, the first PDCP entity is connected to the plurality of first RLC entities, and the second PDCP entity is connected to the second RLC entity.

When the first PDCP entity is associated with the first RLC entity, and the second PDCP entity is associated with the second RLC entity, the first RLC entity uses an acknowledged mode (acknowledged mode, AM) for transmission, and the second RLC entity uses an unacknowledged mode (unacknowledged mode, UM) for transmission.

AM transmission is a transmission mode that needs acknowledgment from a peer entity. When the transmitting end performs transmission in the AM transmission mode, if the peer entity does not acknowledge successful transmission of data, data retransmission is performed, to ensure successful transmission of the data. Therefore, the first RLC entity uses the AM for transmission, so that it can be ensured that a characteristic of the first transmission path is better than a characteristic of the second transmission path, and the characteristic of the first transmission path is better than a third preset value.

The UM mode is a transmission mode that does not need acknowledgment from the peer entity. When the transmitting end performs transmission in the UM transmission mode, there is no need to wait for data acknowledgment from the peer entity. Even if data transmission is not successfully performed, data retransmission is not performed. Therefore, successful data transmission is not ensured. Therefore, when the second RLC entity uses the UM mode for transmission, correct transmission of data on the second transmission path may not be ensured, so that network overheads can be reduced.

When the first PDCP entity is associated with the plurality of first RLC entities, and the second PDCP entity is associated with the second RLC entity, the plurality of first RLC entities and the second RLC entity all use the unacknowledged mode for transmission. When the plurality of first RLC entities use the unacknowledged mode, a duplication (duplication) manner may be used among the plurality of first RLC entities to ensure that a characteristic of a first transmission path is better than a third preset value.

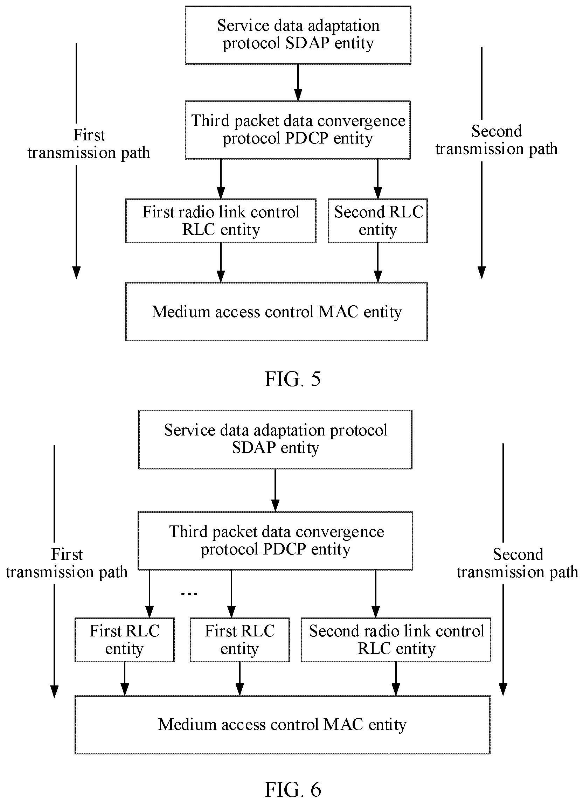

In another optional implementation, a diagram of an entity architecture of the transmitting end may alternatively be shown in FIG. 5. The transmitting end includes an SDAP entity, a third PDCP entity, a first RLC entity, a second RLC entity, and a MAC entity. Both a first transmission path and a second transmission path are associated with the third PDCP entity. In other words, both the first transmission path and the second transmission path are transmission paths on which the third PDCP entity is used for transmission.

As shown in FIG. 5, the third PDCP entity is associated with the first RLC entity and the second RLC entity. In other words, the third PDCP entity is connected to the first RLC entity and the second RLC entity. The first RLC entity and the second RLC entity are respectively RLC entities associated with the first transmission path and the second transmission path. In other words, the first RLC entity and the second RLC entity are respectively RLC entities used for transmission on the first transmission path and the second transmission path.

Optionally, as shown in FIG. 6, a third PDCP entity is associated with a plurality of first RLC entities and a second RLC entity. In other words, the third PDCP entity is connected to the plurality of first RLC entities and the second RLC entity. The first RLC entity and the second RLC entity are respectively RLC entities used when a first transmission path and a second transmission path are used for transmission.

When the third PDCP entity is associated with the first RLC entity and the second RLC entity, the first RLC entity may use AM for transmission, and the second RLC entity may use UM for transmission, to ensure that a characteristic of the first transmission path is better than a characteristic of the second transmission path, and the characteristic of the first transmission path is better than a third preset value. When the third PDCP entity is associated with the plurality of first RLC entities and the second RLC entity, the plurality of first RLC entities and the second RLC entity all may use an UM mode for transmission. Similarly, when the plurality of first RLC entities use the unacknowledged mode, a duplication manner may be used among the plurality of first RLC entities to ensure that a characteristic of the first transmission path is better than a third preset value.

Optionally, in a manner in which a bandwidth of the first transmission path is higher than a bandwidth of the second transmission path, a logical channel priority of the first transmission path is higher than a logical channel priority of the second transmission path, or the like, that the characteristic of the first transmission path is better than the characteristic of the second transmission path may be ensured.

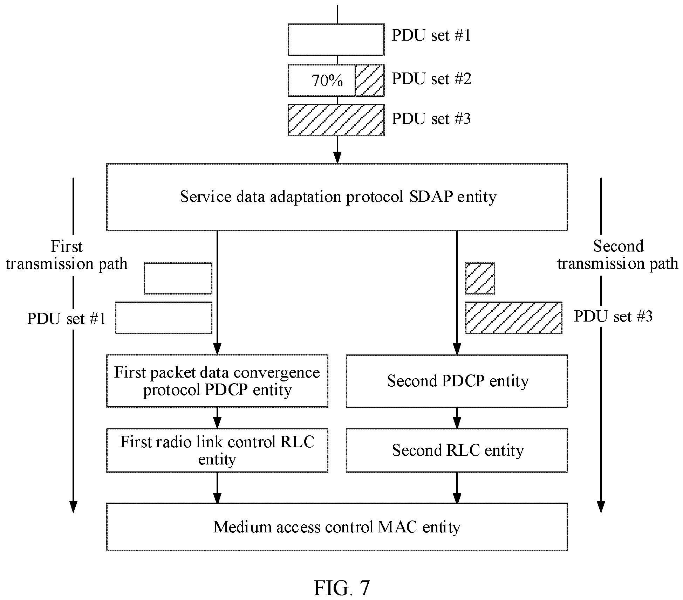

For example, as shown in FIG. 7, PDU sets include a PDU set #1, a PDU set #2, and a PDU set #3. A tolerable loss proportion for PDUs in the PDU set #1 is 0%, a tolerable loss proportion for PDUs in the PDU set #2 is 30%, and the PDU set #3 is allowed to be processed in a best effort manner. In this way, the transmitting end maps all the PDUs in the PDU set #1 to a first transmission path associated with a first RLC entity, maps all the PDUs in the PDU set #3 to a second transmission path associated with a second RLC entity, maps 70% PDUs in the PDU set #2 to the first transmission path associated with the first RLC entity, and maps the remaining 30% PDUs in the PDU set #2 to the second transmission path associated with the second RLC entity. If the PDU set #2 includes 100 PDUs, the transmitting end maps 70 PDUs in the PDU set #2 to the first transmission path, and maps the remaining 30 PDUs in the PDU set #2 to the second transmission path.

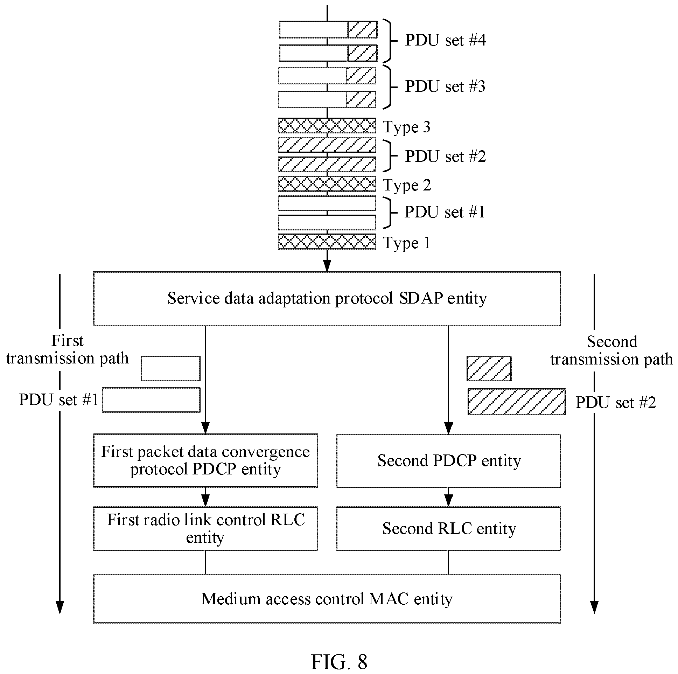

In an optional implementation, before receiving a PDU set from an upper layer, the transmitting end receives indication information indicating classification information of the PDU set. For example, as shown in FIG. 8, before receiving a PDU set #1, a PDU set #2, a PDU set #3 and a PDU set #4, the transmitting end separately receives classification information indicating a type of each PDU set. A type 1 indicates that a tolerable loss proportion for PDUs in the PDU set #1 is 0%, a type 2 indicates that a PDU in the PDU set #2 is allowed to be processed in a best effort manner, and a type 3 indicates that tolerable loss proportions for PDUs in the PDU set #3 and the PDU set #4 are 30%.

In this way, the transmitting end determines, based on the classification information indicating the type of each PDU set, an attribute value of each PDU set in the PDU set #1, the PDU set #2, the PDU set #3, and the PDU set #4, and maps a PDU in each PDU set to a first transmission path and a second transmission path based on the attribute value of each PDU set. Based on information indicated by the type 1, the type 2, and the type 3, the transmitting end maps the PDU set #1 to the first transmission path, maps the PDU set #2 to the second transmission path, maps 70% PDUs in the PDU set #3 and the PDU set #4 to the first transmission path, and maps 30% PDUs in the PDU set #3 and the PDU set #4 to the second transmission path.

The classification information may be carried in the PDU set, or may be carried in additional indication information (for example, a start marker/end marker). The classification information may be one or more of the following: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

In an optional implementation, when the classification information is one or more of the following: the tolerable loss proportion for the PDU in the PDU set, the correct receiving rate of the PDU in the PDU set, and the fault tolerance rate that the PDU in the PDU set needs to satisfy, the transmitting end may directly map the PDU in the PDU set to the first transmission path and the second transmission path based on the attribute value that is of the PDU set and that is determined based on the classification information. When the classification information is one or more the following: the priority, the importance, the type of the information carried in the PDU set, the quantity of bytes allowed to be lost or incorrect in the total quantity of bytes of the PDU set, and whether the PDU set can be discarded, the transmitting end converts, based on an association table between the priority, the importance, the information carried by the PDU set, the quantity of bytes allowed to be lost or incorrect in the total quantity of bytes of the PDU set, or whether the PDU set can be discarded and the tolerable loss proportion for the PDU in the PDU set, the attribute value of the PDU set determined based on the classification information into the tolerable loss proportion for the PDU in the PDU set, and then maps the PDU in the PDU set to the first transmission path and the second transmission path based on the tolerable loss proportion for the PDU in the PDU set.

For example, the classification information of the PDU set #1 is an importance level of the PDU set #1, and the importance level of the PDU set #1 is an importance level 1. In an association table between the importance level and the tolerable loss proportion for the PDU in the PDU set, the importance level 1 is converted into a tolerable loss proportion 0% for the PDU in the PDU set, an importance level 2 is converted into a tolerable loss proportion 20% for the PDU in the PDU set, and an importance level 3 is converted into a tolerable loss proportion 100% for the PDU in the PDU set. In this way, the transmitting end determines that the tolerable loss proportion for the PDUs in the PDU set #1 is 0%, and then maps the PDU set #1 to the first transmission path with a good transmission characteristic.

For example, the classification information of the PDU set #2 is the quantity of bytes that are allowed to be lost in the total quantity of bytes of the PDU set #2, the PDU set #2 includes 100 bytes, and the quantity of bytes that are allowed to be lost in the total quantity of bytes of the PDU set #2 is 30. The transmitting end determines, based on an association table between the quantity of bytes that are allowed to be lost in the total quantity of bytes of the PDU set and the tolerable loss proportion for the PDU in the PDU set, that a tolerable loss proportion for PDUs in the PDU set #2 is 30%, so that the transmitting end maps 30 bytes in the 100 bytes included in the PDU set #2 to the second transmission path, and maps the remaining 70 bytes in the 100 bytes included in the PDU set #2 to the first transmission path.

In an optional implementation, the transmitting end may further associate a parent PDU set sequence number of a first PUD set with a sub-PDU set sequence number of a second PDU set.

The first PDU set is any PDU set in the PDU set. When a quantity of PDU sets is 1, the first PDU set is the PDU set. For example, if the PDU set is the PDU set #1, the first PDU set is the PDU set #1. When the PDU set includes a plurality of PDU sets, the first PDU set is any one of the plurality of PDU sets. For example, the PDU set includes the PDU set #1, the PDU set #2, and the PDU set #3, and the first PDU set may be the PDU set #1, the PDU set #2, or the PDU set #3.

The second PDU set is a PDU set including a part of or all PDUs in the first PDU set. For example, when the first PDU set is the PDU set #1, and all the PDUs in the PDU set #1 are mapped to the first transmission path or the second transmission path, the second PDU set is a PDU set including all the PDUs in the second PDU set #1, or it may be considered that the second PDU set is the first PDU set (PDU set #1).

For another example, the first PDU set is the PDU set #1, the PDU set #1 includes 100 PDUs, 90 PDUs in the PDU set #1 are mapped to the first transmission path, and the remaining 10 PDUs in the PDU set #1 are mapped to the second transmission path. In this way, the second PDU set includes a PDU set #a including the 90 PDUs in the PDU set #1 and a PDU set #b including the remaining 10 PDUs.

In an optional implementation, when an entity architecture of the transmitting end is shown in FIG. 3 and FIG. 4, in other words, when PDCP entities of the transmitting end include the first PDCP entity and the second PDCP entity, the parent PDU set sequence number is a sequence number maintained at an SDAP layer, and the sub-PDU set sequence number is a sequence number maintained at a PDCP layer.

It may be understood that the sequence number maintained at the SDAP layer of the PDU set may be a PDU set sequence number allocated by an SDAP entity of the transmitting end to the PDU set. At the SDAP layer, all PDUs in one PDU set have a same PDU set sequence number. In other words, at the SDAP layer, the PDU set sequence number indicates that these PDUs belong to the same PDU set. Alternatively, the sequence number maintained at the SDAP layer of the PDU set may mean that the SDAP entity of the transmitting end uses a sequence number that is carried by the PDU in the PDU set and that is in an application layer/inner layer/upper layer/a payload as the sequence number of the PDU set, and records the sequence number at the SDAP layer. The sequence number maintained at the PDCP layer of the PDU set may be a sequence number allocated by the PDCP entity of the transmitting end to a PDU set including all or a part of PDUs in the PDU set. The sequence number indicates that these PDUs belong to the same PDU set. It should be understood that a sequence number of a PDU set is different from a sequence number of a PDU. For different PDUs in a same PDU set, PDU sequence numbers are different, but PDU set sequence numbers are the same.

A sequence number maintained at an RLC layer of the PDU set may be a sequence number allocated by an RLC entity of the transmitting end to the PDU set including all or the part of PDUs in the PDU set. The sequence number indicates that these PDUs belong to the same PDU set.

For example, the first PDU set is the PDU set #1, and the second PDU set includes the PDU set #a including the 90 PDUs in the PDU set #1, and the PDU set #b including the remaining 10 PDUs in the PDU set #1. The PDU set #a is mapped to the first transmission path, and the PDU set #b is mapped to the second transmission path. The first transmission path is associated with the first PDCP entity, and the second transmission path is associated with the second PDCP. In this way, the transmitting end associates a sequence number A of the PDU set #1 maintained at the SDAP layer with a sequence number #a of the PDU set #a maintained at a first PDCP layer and a sequence number #b of the PDU set #b maintained at a second PDCP layer, so that the transmitting end may subsequently query, based on any one of the sequence number #a, the sequence number #b, and the sequence number A, for the remaining sequence number related to the sequence number. For example, the transmitting end may query for the sequence number #b and the sequence number A based on the sequence number #a.

For example, the first PDU set is the PDU set #2, the PDU set #2 is mapped to the first transmission path, and the first transmission path is associated with a first PDCP layer. In this way, the transmitting end associates a sequence number of the PDU set #2 maintained at the SDAP layer with a sequence number of the PDU set #2 maintained at the first PDCP layer.

For example, the first PDU set is the PDU set #3, the PDU set #3 is mapped to the second transmission path, and the second transmission path is associated with a second PDCP layer. In this way, the transmitting end associates a sequence number of the PDU set #3 maintained at the SDAP layer with a sequence number of the PDU set #2 maintained at the second PDCP layer.

In another optional implementation, when an entity architecture of the transmitting end is shown in FIG. 5 and FIG. 6, in other words, when the PDCP entity of the transmitting end is the third PDCP entity, the parent PDU set sequence number is a sequence number maintained at a PDCP layer, and the sub-PDU set sequence number is a sequence number maintained at an RLC layer.

For example, the first PDU set is the PDU set #1, and the second PDU set includes the PDU set #a including the 90 PDUs in the PDU set #1, and the PDU set #b including the remaining 10 PDUs in the PDU set #1. The PDU set #a is mapped to the first transmission path, and the PDU set #b is mapped to the second transmission path. The PDCP entity of the transmitting end is the third PDCP entity, and the third PDCP entity is associated with a first RLC entity and a second RLC entity. The first RLC entity is associated with the first transmission path, and the second RLC entity is associated with the second transmission path.

In this way, the transmitting end associates a sequence number B of the PDU set #1 maintained at a third PDCP layer with a sequence number #m of the PDU set #a maintained at a first RLC layer and a sequence number #n of the PDU set #b maintained at a second RLC layer, so that the transmitting end may subsequently query, based on any one of the sequence number #m, the sequence number #n, and the sequence number B, for a remaining sequence number. For example, the transmitting end queries for the sequence number #n based on the sequence number #m.

For example, the PDCP entity of the transmitting end is the third PDCP entity, the first PDU set is the PDU set #2, the PDU set #2 is mapped to the first transmission path, and the first transmission path is associated with a first RLC layer. In this way, the transmitting end associates a sequence number of the PDU set #2 maintained at a third PDCP layer with a sequence number of the PDU set #2 maintained at a first RLC layer.

For example, the PDCP entity of the transmitting end is the third PDCP entity, the first PDU set is the PDU set #3, the PDU set #3 is mapped to the second transmission path, and the second transmission path is associated with a second RLC layer. In this way, the transmitting end associates a sequence number of the PDU set #3 maintained at a third PDCP layer with a sequence number of the PDU set #2 maintained at the second RLC layer.

It can be learned that, when including two PDCP layers, the transmitting end may associate a sequence number of any PDU set in the PDU set maintained at the SDAP layer with a sequence number of a PDU set including a part of or all PDUs in the PDU set maintained at the PDCP layer. When including one PDCP layer, the transmitting end may associate a sequence number of any PDU set in the PDU set maintained at the PDCP layer with a sequence number of a PDU set including a part of or all PDUs in the PDU set maintained at the RLC layer.

Optionally, the first PDU set may be understood as a parent frame, the second PDU set may be understood as a subframe, the parent PDU set sequence number may also be understood as a parent frame number, and the sub-PDU set sequence number may also be understood as a subframe number.

Similarly, when the transmitting end includes two PDCP entities, the parent frame number is a frame number maintained at the SDAP layer, and the subframe number is a frame number maintained at the PDCP layer. Alternatively, when the transmitting end includes one PDCP entity, the parent frame number is a frame number of a PDU set at the PDCP layer, and the subframe number is a frame number of a PDU set at the RLC layer.

For example, the transmitting end includes the first PDCP layer and the second PDCP layer, and the PDU set includes the PDU set #1, the PDU set #2, and the PDU set #3. In other words, the PDU set #1, the PDU set #2, and the PDU set #3 are respectively a parent frame 1, a parent frame 2, and a parent frame 3. The PDU set #1 is mapped to the first transmission path, the PDU set #2 is mapped to the second transmission path, a PDU set #a including 80 PDUs in the PDU set #3 is mapped to the first transmission path, and a PDU set #b including 20 PDUs in the PDU set #3 is mapped to the second transmission path. In this way, the transmitting end may alternatively consider the PDU set #1 as a subframe 1, consider the PDU set #2 as a subframe 2, consider the PDU set #a as a subframe 3, and consider the PDU set #b as a subframe 4.

The transmitting end associates a parent frame number (a frame number maintained at the SDAP layer) of the parent frame 1 with a subframe number (a frame number maintained at the first PDCP layer) of the subframe 1, associates a parent frame number (a frame number maintained at the SDAP layer) of the parent frame 2 with a subframe number (a frame number maintained at the second PDCP layer) of the subframe 2, and associates a parent frame number (a frame number maintained at the SDAP layer) of the parent frame 3 with a subframe number (a frame number maintained at the first PDCP layer) of the subframe 3 and a subframe number (a frame number maintained at the second PDCP layer) of the subframe 4.

For example, the PDCP entity of the transmitting end is the third PDCP layer, and the PDU set includes the PDU set #1, the PDU set #2, and the PDU set #3. In other words, the PDU set #1, the PDU set #2, and the PDU set #3 are respectively a parent frame 1, a parent frame 2, and a parent frame 3. The PDU set #1 is mapped to the first transmission path, the PDU set #2 is mapped to the second transmission path, a PDU set #a including 80 PDUs in the PDU set #3 is mapped to the first transmission path, and a PDU set #b including the remaining 20 PDUs in the PDU set #3 is mapped to the second transmission path. The first transmission path is associated with the first RLC entity, and the second transmission path is associated with the second RLC entity. In this way, the transmitting end may alternatively consider the PDU set #1 as a subframe 1, consider the PDU set #2 as a subframe 2, consider the PDU set #a as a subframe 3, and consider the PDU set #b as a subframe 4.

The transmitting end associates a parent frame number (a frame number maintained at the third PDCP layer) of the parent frame 1 with a subframe number (a frame number maintained at the first RLC layer) of the subframe 1, associates a parent frame number (a frame number maintained at the third PDCP layer) of the parent frame 2 with a subframe number (a frame number maintained at the second RLC layer) of the subframe 2, and associates a parent frame number (a frame number maintained at the third PDCP layer) of the parent frame 3 with a subframe number (a frame number maintained at the first RLC layer) of the subframe 3 and a subframe number (a frame number maintained at the second RLC layer) of the subframe 3.

In an optional implementation, when determining that y PDUs in a third PDU set are lost, the transmitting end may further stop sending the third PDU set and a fourth PDU set. y is an integer greater than or equal to 1, the third PDU set is a PDU set including the part of PDUs mapped to the first transmission path, the fourth PDU set is a PDU set including the part of PDUs mapped to the second transmission path, and a parent PDU set sequence number of the fourth PDU set is the same as a parent PDU set sequence number of the third PDU set.

The parent PDU set sequence number of the fourth PDU set is the same as the parent PDU set sequence number of the third PDU set. This indicates that the fourth PDU set and the third PDU set are two sub-PDU sets split from a same parent PDU set. For example, the first PDU set is one PDU set in the PDU set, 80 PDUs in the first PDU set are mapped to the first transmission path, and the remaining 20 PDUs are mapped to the second transmission path. The 80 PDUs are included in a PDU set #a, and the remaining 20 PDUs are included in a PDU set #b. In this way, parent PDU set sequence numbers of the PDU set #a and the PDU set #b are the same. In other words, the PDU set #a is the third PDU set, and the PDU set #b is the fourth PDU set. Alternatively, the PDU set #a is the fourth PDU set, and the PDU set #b is the third PDU set.

It may be understood that the PDCP entities of the transmitting end include the first PDCP entity and the second PDCP entity. When determining that the y PDUs in the third PDU set are lost, the transmitting end stops sending the third PDU set, notifies the SDAP entity of the parent PDU set sequence number of the third PDCP set, and queries, by using the SDAP entity, whether there is another PDU set whose parent PDU set sequence number is the same as the parent PDU set sequence number of the third PDCP set, that is, whether there is the fourth PDU set. If there is the fourth PDU set whose parent PDU set sequence number is the same as the parent PDU set sequence number of the third PDCP set, the transmitting end also stops sending a PDU in the fourth PDU set. In other words, the transmitting end clears a buffer (buffer) that stores the third PDU set and the fourth PDU set, to reduce network overheads.

Optionally, the PDCP entities of the transmitting end include the first PDCP entity and the second PDCP entity. When determining that the y PDUs in the third PDU set are lost, the transmitting end stops sending the third PDU set, and determines, by using the third PDU set, whether there is a fourth PDU set whose parent PDU set sequence number is the same as the parent PDU set sequence number of the third PDU set. If there is the fourth PDU set whose parent PDU set sequence number is the same as the parent PDU set sequence number of the third PDU set, the transmitting end stops sending a PDU in the fourth PDU set.

Similarly, the PDCP entity of the transmitting end includes the third PDCP entity. When determining that the y PDUs in the third PDU set are lost, the transmitting end stops sending the third PDU set, notifies the third PDCP entity of the parent PDU set sequence number of the third PDCP set, and queries, by using the third PDCP entity, whether there is another PDU set whose parent PDU set sequence number is the same as the parent PDU set sequence number of the third PDCP set, that is, whether there is the fourth PDU set. If there is the fourth PDU set whose parent PDU set sequence number is the same as the parent PDU set sequence number of the third PDCP set, the transmitting end also stops sending a PDU in the fourth PDU set, to reduce network overheads.

For example, when there is a lost PDU in the PDU set #a including the PDUs in the first PDU set that are mapped to the first transmission path, the transmitting end no longer continues to send another PDU in the PDU set #a, and no longer sends a PDU in the PDU set #b having a same parent PDU set sequence number as the PDU set #a, to reduce the network overheads.

In this manner, when determining that there is a lost PDU in the PDU set including the part of PDUs mapped to the first transmission path, in other words, a percentage of PDUs that are successfully sent in the PDU set cannot be ensured, the transmitting end no longer continues to send another PDU in the PDU set, and no longer continues to send a PDU in a PDU set that has a same parent PDU set sequence number as the PDU set, to reduce the network overheads. In addition, in this manner, a percentage of PDUs that are successfully sent in a PDU set other than the third PDU set and the fourth PDU set can be increased.

In another optional implementation, when determining that y packets in a third PDU set are lost and z packets in a fourth PDU set are successfully sent, the third PDU set and the fourth PDU set are sent. The third PDU set is a PDU set including the part of PDUs mapped to the first transmission path, the fourth PDU set is a PDU set including the part of PDUs mapped to the second transmission path, and a parent PDU set sequence number of the fourth PDU set is the same as a parent PDU set sequence number of the third PDU set. y is an integer greater than or equal to 1, and z is an integer greater than or equal to y.

Different from the foregoing implementation, when determining that there is a lost PDU in the PDU set including the part of PDUs mapped to the first transmission path, the transmitting end does not directly stop sending another PDU in the PDU set and a PDU in a PDU set having a same parent PDU set sequence number as the PDU set, but determines whether PDUs whose quantity is greater than or equal to a quantity of lost PDUs and that are in the PDU set having the same parent PDU set sequence number as the PDU set are successfully sent on the second transmission path. If the transmitting end determines that the PDUs whose quantity is greater than or equal to the quantity of lost PDUs and that are in the PDU set having the same parent PDU set sequence number as the PDU set are successfully sent by using the second transmission path, it indicates that continuing to send the another PDU in the PDU set and the PDU in the PDU set having the same parent PDU set sequence number as the PDU set can still ensure a percentage of PDUs that are successfully sent in the PDU set and a percentage of PDUs that are successfully sent in the PDU set having the same parent PDU set sequence number as the PDU set. Therefore, the transmitting end still continues to send the PDU in the PDU set and the PDU in the PDU set having the same parent PDU set sequence number as the PDU set.

In this embodiment of this application, the transmitting end may map the PDU in the PDU set to a plurality of transmission paths whose quantity is less than a quantity of attribute values of a same type of attribute of the PDU set. This helps improve fineness of controlling quality of service of the PDU set and reduce the network overheads. Alternatively, this may be understood as: This helps provide fine QoS control in a small quantity of architecture branches.

It should be noted that different embodiments of this application or some steps (for example, any one or more steps) in different embodiments may be combined with each other to form a new embodiment. It should be noted that, some steps or any one or more steps in different embodiments may include an optional step in an embodiment, may include a mandatory step in an embodiment, or may include an optional step and a mandatory step in an embodiment. This is not limited in this application.

It should be noted that, unless otherwise specified and a logical conflict occurs, terms and/or descriptions in different embodiments are consistent and may be referenced by each other.

It should be noted that a sequence of the steps in this embodiment of this application is not limited in this application.

It should be noted that a determining sequence of different conditions in this embodiment of this application is not limited in this application.

It should be noted that "after" and "when" in this application do not strictly limit a time point.

To implement functions in the method provided in embodiments of this application, the transmitting end may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on a specific application and design constraints of the technical solutions.

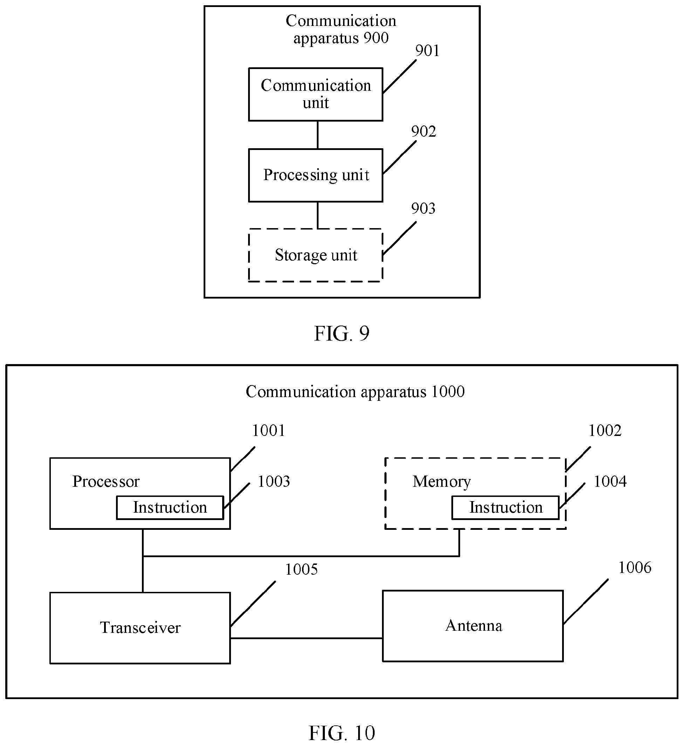

As shown in FIG. 9, an embodiment of this application provides a communication apparatus 900. The communication apparatus 900 may be a component (for example, an integrated circuit or a chip) of the transmitting end. Alternatively, the communication apparatus 900 may be another communication unit, configured to implement the method in the method embodiment of this application. The communication apparatus 900 may include a communication unit 901 and a processing unit 902. Optionally, the communication apparatus 900 may further include a storage unit 903.

In a possible design, one or more units in FIG. 9 may be implemented by one or more processors, implemented by one or more processors and memories, implemented by one or more processors and transceivers, or implemented by one or more processors, memories, and transceivers. This is not limited in this embodiment of this application. The processor, the memory, and the transceiver may be disposed separately, or may be integrated.

The communication apparatus 900 has a function of implementing the transmitting end described in embodiments of this application. For example, the communication apparatus 900 includes a corresponding module, unit, or means (means) used for the transmitting end to perform the steps related to the transmitting end described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

In a possible design, the communication apparatus 900 may include a processing unit 902 and a communication unit 901.

The processing unit 902 is configured to map, based on an attribute of a protocol data unit (PDU) set, a protocol data unit PDU in the PDU set to one or more transmission paths, where each of the plurality of transmission paths has a different characteristic.

The communication unit 901 is configured to send the PDU in the PDU set on the one or more transmission paths, where a quantity of transmission paths is less than or equal to a quantity of attribute values of a same type of attribute of the PDU set.

In an optional implementation, the attribute of the PDU set includes: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

In an optional implementation, the characteristic of the transmission path includes: a PDU packet loss rate, a bandwidth, a transmission delay, a logical channel priority, and a priority.

In an optional implementation, the same type of attribute of the PDU set has at least three different attribute values.

In an optional implementation, if an attribute value of the PDU set is better than a first preset value, each PDU in the PDU set is mapped to a first transmission path; and/or if the attribute value of the PDU set is not better than a second preset value, each PDU in the PDU set is mapped to a second transmission path; and/or if the attribute value of the PDU set is better than the second preset value and not better than the first preset value, (100-X)% PDUs in the PDU set are mapped to the first transmission path, and X% PDUs are mapped to the second transmission path. A characteristic of the first transmission path is better than a third preset value, and a characteristic of the second transmission path is not better than a fourth preset value. The first preset value is better than the second preset value, and the third preset value is better than the fourth preset value. X is related to the attribute value of the PDU set, and X is greater than 0 and less than 100.

In an optional implementation, if an attribute value of the PDU set is better than a first preset value, each PDU in the PDU set is mapped to a first transmission path; and/or if the attribute value of the PDU set is not better than a second preset value, each PDU in the PDU set is mapped to a second transmission path; and/or if the attribute value of the PDU set is better than the second preset value and not better than the first preset value, (100-X-x)% PDUs in the PDU set are mapped to the first transmission path, and (X+x)% PDUs are mapped to the second transmission path. A characteristic of the first transmission path is better than a third preset value, and a characteristic of the second transmission path is not better than a fourth preset value. The first preset value is better than the second preset value, and the third preset value is better than the fourth preset value. X is related to the attribute value of the PDU set and is greater than 0 and less than 100, and x is a real number greater than or equal to 0 and less than or equal to 100-X.

In an optional implementation, the first transmission path is associated with a first packet data convergence protocol PDCP entity, and the second transmission path is associated with a second PDCP entity.

In an optional implementation, a first radio link control RLC entity associated with the first PDCP entity uses an acknowledged mode for transmission, and a second RLC entity associated with the second PDCP entity uses an unacknowledged mode for transmission. Alternatively, a plurality of first RLC entities associated with the first PDCP entity and a second RLC entity associated with the second PDCP entity all use an unacknowledged mode for transmission.

In another optional implementation, both the first transmission path and the second transmission path are associated with a third PDCP entity.

In an optional implementation, a first RLC entity associated with the third PDCP entity uses an acknowledged mode for transmission, and a second RLC entity associated with the third PDCP entity uses an unacknowledged mode for transmission. Alternatively, a plurality of first RLC entities associated with the third PDCP entity and a second RLC entity associated with the third PDCP entity all use an unacknowledged mode for transmission. The first RLC entity is an RLC entity associated with the first transmission path, and the second RLC entity is an RLC entity associated with the second transmission path.

In an optional implementation, the processing unit 902 is further configured to associate a parent PDU set sequence number of a first PDU set with a sub-PDU set sequence number of a second PDU set. The first PDU set is any PDU set in the PDU set, and the second PDU set is a PDU set including a part of or all PDUs in the first PDU set. The parent PDU set sequence number is a sequence number maintained at a service data adaptation protocol SDAP layer, and the sub-PDU set sequence number is a sequence number maintained at a PDCP layer. Alternatively, the parent PDU set sequence number is a sequence number maintained at a PDCP layer, and the sub-PDU set sequence number is a sequence number maintained at an RLC layer.

In an optional implementation, the processing unit 902 is further configured to: when determining that y PDUs in a third PDU set are lost, stop sending the third PDU set and a fourth PDU set, where y is an integer greater than or equal to 1.

The third PDU set is a PDU set including the part of PDUs mapped to the first transmission path, the fourth PDU set is a PDU set including the part of PDUs mapped to the second transmission path, and a parent PDU set sequence number of the fourth PDU set is the same as a parent PDU set sequence number of the third PDU set.

In another optional implementation, the processing unit 902 is further configured to: when determining that y packets in a third PDU set are lost and z packets in a fourth PDU set are successfully sent, send the third PDU set and the fourth PDU set. The third PDU set is a PDU set including the part of PDUs mapped to the first transmission path, the fourth PDU set is a PDU set including the part of PDUs mapped to the second transmission path, a parent PDU set sequence number of the fourth PDU set is the same as a parent PDU set sequence number of the third PDU set, y is an integer greater than or equal to 1, and z is an integer greater than or equal to y.

This embodiment of this application and the foregoing method embodiment are based on a same concept, and bring same technical effects. For a specific principle, refer to descriptions of the foregoing embodiment. Details are not described again.

An embodiment of this application further provides a communication apparatus 1000. FIG. 10 is a diagram of a structure of the communication apparatus 1000. The communication apparatus 1000 may be a transmitting end, or may be a chip, a chip system, a processor, or the like that supports the transmitting end in implementing the foregoing method. The apparatus may be configured to implement the method described in the foregoing method embodiment. For details, refer to the descriptions in the foregoing method embodiment.

The communication apparatus 1000 may include one or more processors 1001. The processor 1001 may be a general-purpose processor, a dedicated processor, or the like. For example, the processor 1001 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1000 may include one or more memories 1002, where the memory stores instructions 1004. The instructions may be run on the processor 1001, so that the communication apparatus 1000 performs the method described in the foregoing method embodiment. Optionally, the memory 1002 may further store data. The processor 1001 and the memory 1002 may be separately disposed, or may be integrated together.

The memory 1002 may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 1000 may further include a transceiver 1005 and an antenna 1006. The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

In a design, for a case in which the communication apparatus 1000 is configured to implement a function of the transmitting end in embodiments of this application:
The processor 1001 is configured to map, based on an attribute of a protocol data unit (PDU) set, a protocol data unit PDU in the PDU set to one or more transmission paths, where each of the plurality of transmission paths has a different characteristic.

The transceiver 1005 is configured to send the PDU in the PDU set on the one or more transmission paths, where a quantity of transmission paths is less than or equal to a quantity of attribute values of a same type of attribute of the PDU set.

In an optional implementation, the attribute of the PDU set includes: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

In an optional implementation, the characteristic of the transmission path includes: a PDU packet loss rate, a bandwidth, a transmission delay, a logical channel priority, and a priority.

In an optional implementation, the same type of attribute of the PDU set has at least three different attribute values.

In an optional implementation, if an attribute value of the PDU set is better than a first preset value, each PDU in the PDU set is mapped to a first transmission path; and/or if the attribute value of the PDU set is not better than a second preset value, each PDU in the PDU set is mapped to a second transmission path; and/or if the attribute value of the PDU set is better than the second preset value and not better than the first preset value, (100-X)% PDUs in the PDU set are mapped to the first transmission path, and X% PDUs are mapped to the second transmission path. A characteristic of the first transmission path is better than a third preset value, and a characteristic of the second transmission path is not better than a fourth preset value. The first preset value is better than the second preset value, and the third preset value is better than the fourth preset value. X is related to the attribute value of the PDU set, and X is greater than 0 and less than 100.

In an optional implementation, if an attribute value of the PDU set is better than a first preset value, each PDU in the PDU set is mapped to a first transmission path; and/or if the attribute value of the PDU set is not better than a second preset value, each PDU in the PDU set is mapped to a second transmission path; and/or if the attribute value of the PDU set is better than the second preset value and not better than the first preset value, (100-X-x)% PDUs in the PDU set are mapped to the first transmission path, and (X+x)% PDUs are mapped to the second transmission path. A characteristic of the first transmission path is better than a third preset value, and a characteristic of the second transmission path is not better than a fourth preset value. The first preset value is better than the second preset value, and the third preset value is better than the fourth preset value. X is related to the attribute value of the PDU set and is greater than 0 and less than 100, and x is a real number greater than or equal to 0 and less than or equal to 100-X.

In an optional implementation, the first transmission path is associated with a first packet data convergence protocol PDCP entity, and the second transmission path is associated with a second PDCP entity.

In an optional implementation, a first radio link control RLC entity associated with the first PDCP entity uses an acknowledged mode for transmission, and a second RLC entity associated with the second PDCP entity uses an unacknowledged mode for transmission. Alternatively, a plurality of first RLC entities associated with the first PDCP entity and a second RLC entity associated with the second PDCP entity all use an unacknowledged mode for transmission.

In another optional implementation, both the first transmission path and the second transmission path are associated with a third PDCP entity.

In an optional implementation, a first RLC entity associated with the third PDCP entity uses an acknowledged mode for transmission, and a second RLC entity associated with the third PDCP entity uses an unacknowledged mode for transmission. Alternatively, a plurality of first RLC entities associated with the third PDCP entity and a second RLC entity associated with the third PDCP entity all use an unacknowledged mode for transmission. The first RLC entity is an RLC entity associated with the first transmission path, and the second RLC entity is an RLC entity associated with the second transmission path.

In an optional implementation, the processor 1001 is further configured to associate a parent PDU set sequence number of a first PDU set with a sub-PDU set sequence number of a second PDU set. The first PDU set is any PDU set in the PDU set, and the second PDU set is a PDU set including a part of or all PDUs in the first PDU set. The parent PDU set sequence number is a sequence number maintained at a service data adaptation protocol SDAP layer, and the sub-PDU set sequence number is a sequence number maintained at a PDCP layer. Alternatively, the parent PDU set sequence number is a sequence number maintained at a PDCP layer, and the sub-PDU set sequence number is a sequence number maintained at an RLC layer.

In an optional implementation, the processor 1001 is further configured to: when determining that y PDUs in a third PDU set are lost, stop sending the third PDU set and a fourth PDU set, where y is an integer greater than or equal to 1, the third PDU set is a PDU set including the part of PDUs mapped to the first transmission path, the fourth PDU set is a PDU set including the part of PDUs mapped to the second transmission path, and a parent PDU set sequence number of the fourth PDU set is the same as a parent PDU set sequence number of the third PDU set.

In another optional implementation, the processor 1001 is further configured to: when determining that y packets in a third PDU set are lost and z packets in a fourth PDU set are successfully sent, send the third PDU set and the fourth PDU set. The third PDU set is a PDU set including the part of PDUs mapped to the first transmission path, the fourth PDU set is a PDU set including the part of PDUs mapped to the second transmission path, a parent PDU set sequence number of the fourth PDU set is the same as a parent PDU set sequence number of the third PDU set, y is an integer greater than or equal to 1, and z is an integer greater than or equal to y.

This embodiment of this application and the foregoing method embodiment are based on a same concept, and bring same technical effects. For a specific principle, refer to descriptions of the foregoing embodiment. Details are not described again.

In another possible design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1001 may store instructions 1003, and the instructions 1003 are run on the processor 1001, to enable the communication apparatus 1000 to perform the method described in the foregoing method embodiment. The instructions 1003 may be fixed in the processor 1001. In this case, the processor 1001 may be implemented by hardware.

In still another possible design, the communication apparatus 1000 may include a circuit, and the circuit may implement a sending, receiving, or communication function in the foregoing method embodiment. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a first apparatus. However, a scope of the communication apparatus described in embodiments of this application is not limited thereto, and the structure of the communication apparatus may not be limited by FIG. 10. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (modulator); and
(4) a module that can be embedded in another device.

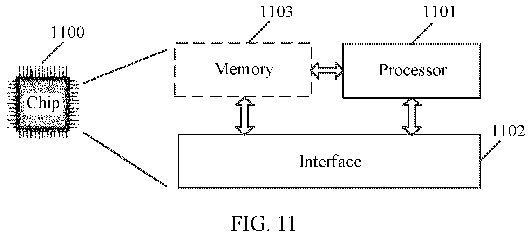

For a case in which the communication apparatus may be a chip or a chip system, refer to a diagram of a structure of a chip shown in FIG. 11. A chip 1100 shown in FIG. 11 includes a processor 1101 and an interface 1102. There may be one or more processors 1101, and there may be a plurality of interfaces 1102. The processor 1101 may be a logic circuit, and the interface 1102 may be an input/output interface, an input interface, or an output interface. The chip 1100 may further include a memory 1103.

In a design, for a case in which the chip is configured to implement a function of a transmitting end in embodiments of this application:
The processor 1101 is configured to map, based on an attribute of a protocol data unit (PDU) set, a protocol data unit PDU in the PDU set to one or more transmission paths, where each of the plurality of transmission paths has a different characteristic.

The interface 1102 is configured to send the PDU in the PDU set on the one or more transmission paths.

A quantity of transmission paths is less than or equal to a quantity of attribute values of a same type of attribute of the PDU set.

In this embodiment of this application, the chip 1100 may further perform the implementation of the communication apparatus 900.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the method embodiment shown in the data sending method 100 are based on a same concept, and bring same technical effect. For a specific principle, refer to the descriptions of the embodiment shown in the data sending method 100. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes one or more network devices and one or more terminal devices. In another possible design, the system may further include another device that interacts with the network device and the terminal device in the solutions provided in this application.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A data sending method, wherein the method comprises:
mapping, based on an attribute of a protocol data unit set PDU set, a protocol data unit PDU in the PDU set to one or more transmission paths, wherein each of the plurality of transmission paths has a different characteristic; and
sending the PDU in the PDU set on the one or more transmission paths, wherein
a quantity of transmission paths is less than or equal to a quantity of attribute values of a same type of attribute of the PDU set.

2. The method according to claim 1, wherein
the attribute of the PDU set comprises: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

3. The method according to claim 1 or 2, wherein
the characteristic of the transmission path comprises: a PDU packet loss rate, a bandwidth, a transmission delay, a logical channel priority, and a priority.

4. The method according to any one of claims 1 to 3, wherein the same type of attribute of the PDU set has at least three different attribute values.

5. The method according to any one of claims 1 to 4, wherein
if an attribute value of the PDU set is better than a first preset value, each PDU in the PDU set is mapped to a first transmission path; and/or
if the attribute value of the PDU set is not better than a second preset value, each PDU in the PDU set is mapped to a second transmission path; and/or
if the attribute value of the PDU set is better than the second preset value and not better than the first preset value, (100-X)% PDUs in the PDU set are mapped to the first transmission path, and X% PDUs are mapped to the second transmission path, wherein
a characteristic of the first transmission path is better than a third preset value, a characteristic of the second transmission path is not better than a fourth preset value, the first preset value is better than the second preset value, and the third preset value is better than the fourth preset value; and
X is related to the attribute value of the PDU set, and X is greater than 0 and less than 100.

6. The method according to any one of claims 1 to 4, wherein
if an attribute value of the PDU set is better than a first preset value, each PDU in the PDU set is mapped to a first transmission path; and/or
if the attribute value of the PDU set is not better than a second preset value, each PDU in the PDU set is mapped to a second transmission path; and/or
if the attribute value of the PDU set is better than the second preset value and not better than the first preset value, (100-X-x)% PDUs in the PDU set are mapped to the first transmission path, and (X+x)% PDUs are mapped to the second transmission path, wherein
a characteristic of the first transmission path is better than a third preset value, a characteristic of the second transmission path is not better than a fourth preset value, the first preset value is better than the second preset value, and the third preset value is better than the fourth preset value; and
X is related to the attribute value of the PDU set, X is greater than 0 and less than 100, and x is a real number greater than or equal to 0 and less than or equal to 100-X.

7. The method according to claim 5 or 6, wherein
the first transmission path is associated with a first packet data convergence protocol PDCP entity, and the second transmission path is associated with a second PDCP entity.

8. The method according to claim 7, wherein
a first radio link control RLC entity associated with the first PDCP entity uses an acknowledged mode for transmission, and a second RLC entity associated with the second PDCP entity uses an unacknowledged mode for transmission; or
a plurality of first RLC entities associated with the first PDCP entity and a second RLC entity associated with the second PDCP entity all use an unacknowledged mode for transmission.

9. The method according to claim 5 or 6, wherein
both the first transmission path and the second transmission path are associated with a third PDCP entity.

10. The method according to claim 9, wherein the method further comprises:
using, by a first RLC entity associated with the third PDCP entity, an acknowledged mode for transmission; and using, by a second RLC entity associated with the third PDCP entity, an unacknowledged mode for transmission; or
using, by a plurality of first RLC entities associated with the third PDCP entity and a second RLC entity associated with the third PDCP entity, an unacknowledged mode for transmission, wherein
the first RLC entity is an RLC entity associated with the first transmission path, and the second RLC entity is an RLC entity associated with the second transmission path.

11. The method according to any one of claims 7 to 10, wherein the method further comprises:
associating a parent PDU set sequence number of a first PDU set with a sub-PDU set sequence number of a second PDU set, wherein
the first PDU set is any PDU set in the PDU set, and the second PDU set is a PDU set comprising a part of or all PDUs in the first PDU set; and
the parent PDU set sequence number is a sequence number maintained at a service data adaptation protocol SDAP layer, and the sub-PDU set sequence number is a sequence number maintained at a PDCP layer; or
the parent PDU set sequence number is a sequence number maintained at a PDCP layer, and the sub-PDU set sequence number is a sequence number maintained at an RLC layer.

12. The method according to claim 11, wherein the method further comprises:
when determining that y PDUs in a third PDU set are lost, stopping sending the third PDU set and a fourth PDU set, wherein y is an integer greater than or equal to 1, wherein
the third PDU set is a PDU set comprising the part of PDUs mapped to the first transmission path; and
the fourth PDU set is a PDU set comprising the part of PDUs mapped to the second transmission path, and a parent PDU set sequence number of the fourth PDU set is the same as a parent PDU set sequence number of the third PDU set.

13. The method according to claim 11, wherein the method further comprises:
when determining that y packets in a third PDU set are lost and z packets in a fourth PDU set are successfully sent, sending the third PDU set and the fourth PDU set, wherein
the third PDU set is a PDU set comprising the part of PDUs mapped to the first transmission path;
the fourth PDU set is a PDU set comprising the part of PDUs mapped to the second transmission path, and a parent PDU set sequence number of the fourth PDU set is the same as a parent PDU set sequence number of the third PDU set; and
y is an integer greater than or equal to 1, and z is an integer greater than or equal to y.

14. A communication apparatus, comprising:
a processing unit, configured to map, based on an attribute of a protocol data unit set PDU set, a protocol data unit PDU in the PDU set to one or more transmission paths, wherein each of the plurality of transmission paths has a different characteristic; and
a communication unit, configured to send the PDU in the PDU set on the one or more transmission paths, wherein
a quantity of transmission paths is less than or equal to a quantity of attribute values of a same type of attribute of the PDU set.

15. The apparatus according to claim 14, wherein
the attribute of the PDU set comprises: a priority, importance, a tolerable loss proportion for the PDU in the PDU set, a correct receiving rate of the PDU in the PDU set, a fault tolerance rate that the PDU in the PDU set needs to satisfy, a type of information carried in the PDU set, a quantity of bytes allowed to be lost or incorrect in a total quantity of bytes of the PDU set, a bit error rate of data in the PDU set, and whether the PDU set can be discarded.

16. The apparatus according to claim 14 or 15, wherein
the characteristic of the transmission path comprises: a PDU packet loss rate, a bandwidth, a transmission delay, a logical channel priority, and a priority.

17. The apparatus according to any one of claims 14 to 16, wherein the same type of attribute of the PDU set has at least three different attribute values.

18. The apparatus according to any one of claims 14 to 17, wherein
if an attribute value of the PDU set is better than a first preset value, each PDU in the PDU set is mapped to a first transmission path; and/or
if the attribute value of the PDU set is not better than a second preset value, each PDU in the PDU set is mapped to a second transmission path; and/or
if the attribute value of the PDU set is better than the second preset value and not better than the first preset value, (100-X)% PDUs in the PDU set are mapped to the first transmission path, and X% PDUs are mapped to the second transmission path, wherein
a characteristic of the first transmission path is better than a third preset value, a characteristic of the second transmission path is not better than a fourth preset value, the first preset value is better than the second preset value, and the third preset value is better than the fourth preset value; and
X is related to the attribute value of the PDU set, and X is greater than 0 and less than 100.

19. The apparatus according to any one of claims 14 to 17, wherein
if an attribute value of the PDU set is better than a first preset value, each PDU in the PDU set is mapped to a first transmission path; and/or
if the attribute value of the PDU set is not better than a second preset value, each PDU in the PDU set is mapped to a second transmission path; and/or
if the attribute value of the PDU set is better than the second preset value and not better than the first preset value, (100-X-x)% PDUs in the PDU set are mapped to the first transmission path, and (X+x)% PDUs are mapped to the second transmission path, wherein
a characteristic of the first transmission path is better than a third preset value, a characteristic of the second transmission path is not better than a fourth preset value, the first preset value is better than the second preset value, and the third preset value is better than the fourth preset value; and
X is related to the attribute value of the PDU set, X is greater than 0 and less than 100, and x is a real number greater than or equal to 0 and less than or equal to 100-X.

20. The apparatus according to claim 18 or 19, wherein
the first transmission path is associated with a first packet data convergence protocol PDCP entity, and the second transmission path is associated with a second PDCP entity.

21. The apparatus according to claim 20, wherein
a first radio link control RLC entity associated with the first PDCP entity uses an acknowledged mode for transmission, and a second RLC entity associated with the second PDCP entity uses an unacknowledged mode for transmission; or
a plurality of first RLC entities associated with the first PDCP entity and a second RLC entity associated with the second PDCP entity all use an unacknowledged mode for transmission.

22. The apparatus according to claim 18 or 19, wherein
both the first transmission path and the second transmission path are associated with a third PDCP entity.

23. The apparatus according to claim 22, wherein
a first RLC entity associated with the third PDCP entity uses an acknowledged mode for transmission, and a second RLC entity associated with the third PDCP entity uses an unacknowledged mode for transmission; or
a plurality of first RLC entities associated with the third PDCP entity and a second RLC entity associated with the third PDCP entity all use an unacknowledged mode for transmission, wherein
the first RLC entity is an RLC entity associated with the first transmission path, and the second RLC entity is an RLC entity associated with the second transmission path.

24. The apparatus according to any one of claims 20 to 23, wherein the processing unit is further configured to:
associate a parent PDU set sequence number of a first PDU set with a sub-PDU set sequence number of a second PDU set, wherein
the first PDU set is any PDU set in the PDU set, and the second PDU set is a PDU set comprising a part of or all PDUs in the first PDU set; and
the parent PDU set sequence number is a sequence number maintained at a service data adaptation protocol SDAP layer, and the sub-PDU set sequence number is a sequence number maintained at a PDCP layer; or
the parent PDU set sequence number is a sequence number maintained at a PDCP layer, and the sub-PDU set sequence number is a sequence number maintained at an RLC layer.

25. The apparatus according to claim 24, wherein the processing unit is further configured to:
when determining that y PDUs in a third PDU set are lost, stop sending the third PDU set and a fourth PDU set, wherein y is an integer greater than or equal to 1, wherein
the third PDU set is a PDU set comprising the part of PDUs mapped to the first transmission path; and
the fourth PDU set is a PDU set comprising the part of PDUs mapped to the second transmission path, and a parent PDU set sequence number of the fourth PDU set is the same as a parent PDU set sequence number of the third PDU set.

26. The apparatus according to claim 24, wherein the processing unit is further configured to:
when determining that y packets in a third PDU set are lost and z packets in a fourth PDU set are successfully sent, send the third PDU set and the fourth PDU set, wherein
the third PDU set is a PDU set comprising the part of PDUs mapped to the first transmission path;
the fourth PDU set is a PDU set comprising the part of PDUs mapped to the second transmission path, and a parent PDU set sequence number of the fourth PDU set is the same as a parent PDU set sequence number of the third PDU set; and
y is an integer greater than or equal to 1, and z is an integer greater than or equal to y.

27. A communication apparatus, comprising a processor and a transceiver, wherein the transceiver is configured to communicate with another communication apparatus, and the processor is configured to run a program, to enable the communication apparatus to implement the method according to any one of claims 1 to 13.

28. A computer-readable storage medium, wherein the computer-readable storage medium is configured to store instructions, and when the instructions are run on a computer, the method according to any one of claims 1 to 13 is performed.

29. A computer program product comprising instructions, wherein when the computer program product runs on a computer, the method according to any one of claims 1 to 13 is performed.
